(19) Europäisches Patentamt / European Patent Office / Office européen des brevets

(11) **EP 4 598 219 A1**

(12) **EUROPEAN PATENT APPLICATION**
published in accordance with Art. 153(4) EPC

(43) Date of publication:
**06.08.2025 Bulletin 2025/32**

(21) Application number: **23883067.3**

(22) Date of filing: **24.10.2023**

(51) International Patent Classification (IPC):
*H04W 72/23* (2023.01)    *H04W 72/04* (2023.01)
*H04L 5/00* (2006.01)    *H04L 27/26* (2006.01)
*H04L 5/14* (2006.01)

(52) Cooperative Patent Classification (CPC):
**H04L 5/00; H04L 5/14; H04L 27/26; H04W 72/04; H04W 72/23**

(86) International application number:
**PCT/KR2023/016577**

(87) International publication number:
**WO 2024/090961 (02.05.2024 Gazette 2024/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.10.2022  KR 20220138346**

(71) Applicant: Samsung Electronics Co., Ltd.
**Suwon-si, Gyeonggi-do 16677 (KR)**

(72) Inventors:
• CHOI, Kyungjun
  Suwon-si, Gyeonggi-do 16677 (KR)
• SHIM, Jaeyeon
  Suwon-si, Gyeonggi-do 16677 (KR)
• JI, Hyoungju
  Suwon-si, Gyeonggi-do 16677 (KR)
• CHOE, Hyemin
  Suwon-si, Gyeonggi-do 16677 (KR)

(74) Representative: **Nederlandsch Octrooibureau P.O. Box 29720 2502 LS The Hague (NL)**

(54) **SCHEDULING METHOD AND APPARATUS FOR FULL DUPLEX COMMUNICATION IN WIRELESS COMMUNICATION SYSTEM**

(57)    The present disclosure relates to a 5G or 6G communication system for supporting higher data transmission rates. The present disclosure provides a method for configuring and receiving a downlink control channel in a wireless communication system.

FIG. 16

EP 4 598 219 A1

**Description**

[Technical Field]

The disclosure relates to operations of a terminal and a base station in a wireless communication system. Specifically, the disclosure relates to a method for resource allocation by a terminal and a device capable of performing the same.

[Background Art]

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

In the initial stage of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mm Wave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

With the advance of wireless communication systems as described above, various services can be provided, and accordingly there is a need for ways to smoothly provide these services.

[Disclosure]

[Technical Problem]

The disclosure is to provide a device and a method capable of effectively providing services in a mobile communication system.

The technical subjects pursued in an embodiment of the disclosure may not be limited to the above-mentioned matters, and other technical subjects which are not mentioned may be considered from the following description of an embodiment of the disclosure by those skilled in the art to which the disclosure pertains.

[Technical Solution]

The disclosure for solving the above problem relates to a method performed by a terminal in a wireless communication system supporting subband non-overlapping full duplex (SBFD), the method including: receiving, from a base station, a message including configuration information for an uplink subband including time and frequency resource information for configuring a part of a resource for downlink reception as a resource for uplink transmission; identifying a resource for monitoring a control channel, based on the message; and monitoring the control channel, based on the identified resource.

In addition, the message includes at least one of information on a valid control resource set (CORESET) resource in which at least one CORESET related to a search space for monitoring the control channel and the uplink subband do not overlap each other or information on an invalid CORESET resource in which the at least one CORESET and the uplink subband overlap each other, and the monitoring includes performing the monitoring only for the valid CORESET resource.

In addition, the monitoring includes, when a resource block (RB) determined according to a configuration of a control resource set (CORESET) overlaps the uplink subband in a symbol corresponding to a physical downlink control channel (PDCCH) monitoring occasion (MO), monitoring the control channel except for the PDCCH MO.

In addition, the message includes at least one bitmap indicating whether to perform monitoring for at least one physical downlink control channel (PDCCH) monitoring occasion (MO), or information indicating a symbol type for which monitoring may be performed in the PDCCH MO, and the monitoring includes monitoring the control channel, based on the at least one bitmap or the information indicating the symbol type.

The disclosure for solving the above problem relates to a method performed by a base station in a wireless communication system supporting SBFD, the method including: determining configuration information for an uplink subband including a time and frequency resource for configuring a part of a resource for downlink reception as a resource for uplink transmission; and transmitting, to a terminal, a message including the determined configuration information for the uplink subband, wherein the configuration information for the uplink subband is information related to a resource for monitoring a control channel of the terminal.

In addition, the determining of the configuration information for the uplink subband includes determining, as a valid control resource set (CORESET) resource, a CORESET resource in which at least one CORESET related to a search space for monitoring the control channel and the uplink subband do not overlap each other, or determining, as an invalid CORESET resource, a CORESET resource in which the at least one CORESET and the uplink subband overlap each other.

In addition, the determining of the configuration information for the uplink subband includes determining at least one bitmap indicating whether to perform monitoring for at least one physical downlink control channel (PDCCH) monitoring occasion (MO), and the message includes the at least one bitmap.

In addition, the determining of the configuration information for the uplink subband includes determining information indicating a symbol type for which monitoring may be performed in a physical downlink control channel (PDCCH) monitoring occasion (MO), and the message includes the information indicating the symbol type.

The disclosure for solving the above problem relates to a terminal in a wireless communication system supporting SBFD, the terminal including: a transceiver; and a controller connected to the transceiver and configured to receive, from a base station, a message including configuration information for an uplink subband including time and frequency resource information for configuring a part of a resource for downlink reception as a resource for uplink transmission, identify a resource for monitoring a control channel, based on the message, and monitor the control channel, based on the identified resource.

The disclosure for solving the above problem relates to a base station in a wireless communication system supporting SBFD, the base station including: a transceiver; and a controller connected to the transceiver and configured to determine configuration information for an uplink subband including a time and frequency resource for configuring a part of a resource for downlink reception as a resource for uplink transmission, and transmit, to a terminal, a message including the determined configuration information for the uplink subband, wherein the configuration information for the uplink subband is information related to a resource for monitoring a control channel of the terminal.

An embodiment of the disclosure proposes a method for receiving a downlink control channel in subband non-overlapping full duplex (SBFD).

According to an SBFD operation, some RBs of a downlink symbol may be used for uplink transmission. Therefore, a terminal needs an operation for receiving a PDCCH overlapping the some RBs. The disclosure proposes methods for solving the above problem.

According to an embodiment, a base station may configure a search space according to the SBFD operation for the terminal. For example, at the time of configuring each search space, the terminal may receive a configuration of a control resource set (CORESET) pair suitable for the search space. A first CORESET among the CORESET pair may be applied to a downlink only symbol, while a second CORESET may be applied to an SBFD symbol. For another example, the terminal may receive an indication of a bitmap indicating information on whether to monitor a PDCCH in each period in addition to a period/offset of a slot unit in the search space. A length of the bitmap may be determined based on the number of physical downlink control channel (PDCCH) monitoring occasions (MOs) within a time division multiplexing (TDD) period or one frame (10 ms), or the number of PDCCH MOs within two frames (20 ms). For another example, the search space may include a 1-bit indicator. If the 1-bit is "0", the terminal may monitor a PDCCH MO of the search space in the downlink only symbol. Further, the terminal may not monitor the PDCCH MO of the search space in the SBFD symbol. If the 1-bit is "1", the terminal may monitor the PDCCH MO of the search space in the SBFD symbol. Further, the terminal may not monitor the PDCCH MO of the search space in the downlink only symbol.

According to another embodiment, the terminal may define an operation when a PDCCH MO of a search space overlaps an RB used for UL transmission. For example, the terminal may not monitor a PDCCH MO that overlaps the RB used for UL transmission, may not monitor a PDCCH candidate that overlaps the RB, may not monitor a control channel element (CCE) that overlaps the RB, may not monitor a resource element group (REG) bundle that overlaps the RB, may not monitor an REG that overlaps the RB, or may not monitor a resource element (RE) that overlaps the RB.

[Advantageous Effects]

The disclosure provides a device and a method capable of effectively providing a service in a mobile communication system.

Advantageous effects obtainable from the disclosure may not be limited to the above - mentioned effects, and other effects which are not mentioned may be clearly understood from the following descriptions by those skilled in the art to which the disclosure pertains.

[Description of Drawings]

FIG. 1 illustrates a basic structure of a time-frequency domain in a wireless communication system according to an embodiment of the disclosure.

FIG. 2 illustrates a structure of a frame, a subframe, and a slot in a wireless communication system according to an embodiment of the disclosure.

FIG. 3 illustrates an example of a bandwidth part configuration in a wireless communication system according to an embodiment of the disclosure.

FIG. 4 illustrates an example of a control resource set configuration of a downlink control channel in a wireless communication system according to an embodiment of the disclosure.

FIG. 5 illustrates a structure of a downlink control channel in a wireless communication system according to an embodiment of the disclosure.

FIG. 6 illustrates a method in which a base station and a UE transmit/receive data in consideration of a downlink data channel and a rate matching resource in a wireless communication system according to an embodiment of the disclosure.

FIG. 7 illustrates an example of frequency domain resource allocation with regard to a PDSCH in a wireless communication system according to an embodiment of the disclosure.

FIG. 8 illustrates an example of time domain resource allocation with regard to a PDSCH in a wireless communication system according to an embodiment of the disclosure.

FIG. 9 illustrates an example of time domain resource allocation according to a subcarrier spacing with regard to a data channel and a control channel in a wireless communication system according to an embodiment of the disclosure.

FIG. 10 illustrates radio protocol structures of a base station and a UE in single cell, carrier aggregation, and dual connectivity situations in aa wireless communication system according to an embodiment of the disclosure;

FIG. 11 is a diagram illustrating a TDD configuration and an SBFD configuration according to an embodiment of the disclosure;

FIG. 12 is a diagram illustrating an SBFD configuration according to an embodiment of the disclosure;

FIG. 13 is a diagram illustrating a PDCCH MO according to an existing configuration;

FIG. 14 is a diagram illustrating a PDCCH MO according to an embodiment of the disclosure;

FIG. 15 is a diagram illustrating a bitmap-based PDCCH MO according to an embodiment of the disclosure;

FIG. 16 is a diagram illustrating a case of not monitoring all PDCCH candidates of a PDCCH MO according to an embodiment of the disclosure;

FIG. 17 is a diagram illustrating a case of not monitoring a PDCCH candidate according to an embodiment of the disclosure;

FIG. 18 is a diagram illustrating a case of not monitoring some CCEs of a PDCCH candidate according to an embodiment of the disclosure;

FIG. 19 is a diagram illustrating a case of determining an index of a CCE, based on an SBFD configuration, and monitoring a PDCCH candidate according to an embodiment of the disclosure;

FIG. 20 is a diagram illustrating a case of monitoring an REG bundle or an REG of a PDCCH candidate according to an embodiment of the disclosure; and

FIG. 21 is a diagram illustrating a case of monitoring a PDCCH candidate when configuring a wideband CORESET according to an embodiment of the disclosure.

FIG. 22 illustrates a structure of a UE in a wireless communication system according to an embodiment of the disclosure.

FIG. 23 illustrates a structure of a base station in a wireless communication system according to an embodiment of the disclosure.

[Mode for Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Furthermore, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements. Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" refers to a radio link via which a base station transmits a signal to a terminal, and an "uplink (UL)" refers to a radio link via which a terminal transmits a signal to a base station. Furthermore, in the following description, LTE or LTE-A systems may be described by way of example, but the embodiments of the disclosure may also be applied to other communication systems having similar technical backgrounds or channel types. Examples of such communication systems may include 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure. The contents of the disclosure may be applied to FDD and TDD systems.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS) or eNode B, and the downlink refers to a radio link via which the base station transmits data or control signals to the UE. The above multiple access scheme may separate data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. Also, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km$^2$) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC is a cellular-based mission-critical wireless communication service. For example, URLLC may be used for services such as remote control for robots or machines, industrial automation, unmanned aerial vehicles, remote health care, and emergency alert. Thus, URLLC must provide communication with ultra-low latency and ultra-high reliability. For example, a service supporting URLLC must satisfy an air interface latency of less than 0.5 ms, and may also requires a packet error rate of $10^{-5}$ or less. Therefore, for the services supporting URLLC, a 5G system must provide a transmit time interval (TTI) shorter than those of other services, and also may require a design for assigning a large number of resources in a frequency band in order to secure reliability of a communication link.

The three services in 5G, that is, eMBB, URLLC, and mMTC, may be multiplexed and transmitted in a single system. In this case, different transmission/reception techniques and transmission/reception parameters may be used between services in order to satisfy different requirements of the respective services. Of course, 5G is not limited to the three services described above.

## NR time-frequency resources

Hereinafter, a frame structure of a 5G system will be described in more detail with reference to the accompanying drawings.

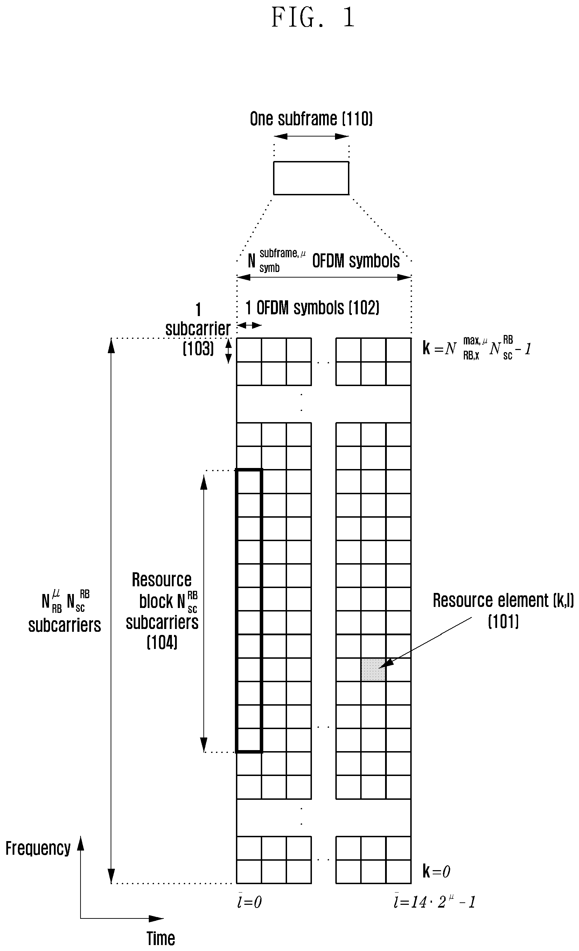

FIG. 1 illustrates a basic structure of a time-frequency domain, which is a radio resource domain used to transmit data or control channels, in a 5G system according to an embodiment of the disclosure.

In FIG. 1, the horizontal axis denotes a time domain, and the vertical axis denotes a frequency domain. The basic unit of resources in the time-frequency domain is a resource element (RE) 101, which may be defined as one orthogonal frequency division multiplexing (OFDM) symbol 102 on the time axis and one subcarrier 103 on the frequency axis. In the frequency domain, $N_{SC}^{RB}$ (for example, 12) consecutive REs may constitute one resource block (RB) 104.

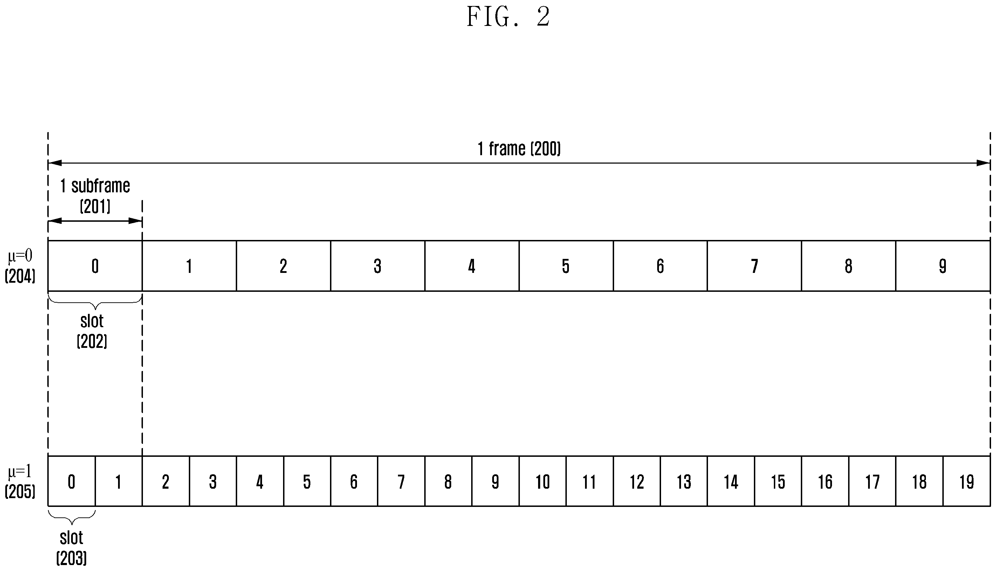

FIG. 2 illustrates a structure of a frame, a subframe, and a slot in a wireless communication system according to an embodiment of the disclosure.

An example of a structure of a frame 200, a subframe 201, and a slot 202 is illustrated in FIG. 2. One frame 200 may be defined as 10ms. One subframe 201 may be defined as 1ms, and thus one frame 200 may include a total of ten subframes 201. One slot 202 or 203 may be defined as 14 OFDM symbols (that is, the number of symbols per one slot $N_{symb}^{slot}=14$). One subframe 201 may include one or multiple slots 202 and 203, and the number of slots 202 and 203 per one subframe 201 may vary depending on configuration values $\mu$ for the subcarrier spacing 204 or 205. The example in FIG. 2 illustrates a case in which the subcarrier spacing configuration value is $\mu=0$ (204), and a case in which $\mu=1$ (205). In the case of $\mu=0$ (204), one subframe 201 may include one slot 202, and in the case of $\mu=1$ (205), one subframe 201 may include two slots 203. That is, the number of slots per one subframe $N_{slot}^{subframe,\mu}$ may differ depending on the subcarrier spacing configuration value $\mu$, and the number of slots per one frame $N_{slot}^{frame,\mu}$ may differ accordingly. $N_{slot}^{subframe,\mu}$ and $N_{slot}^{frame,\mu}$ may be defined according to each subcarrier spacing configuration $\mu$ as in Table 1 below.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

**Bandwidth part (BWP)**

Next, bandwidth part (BWP) configuration in a 5G communication system will be described in detail with reference to the accompanying drawings.

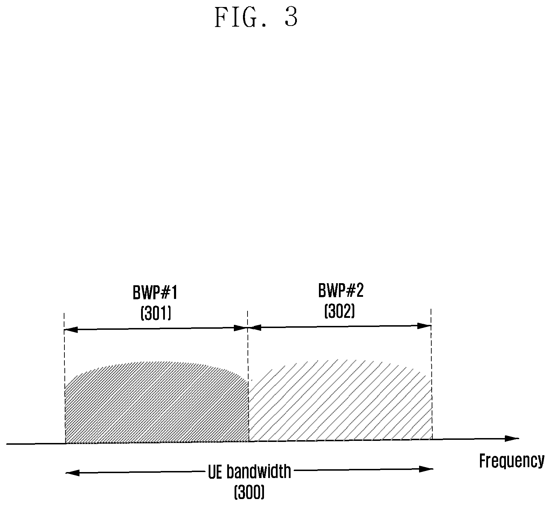

FIG. 3 illustrates an example of a bandwidth part configuration in a wireless communication system according to an embodiment of the disclosure.

FIG. 3 illustrates an example in which a UE bandwidth 300 is configured to include two bandwidth parts, that is, bandwidth part #1 (BWP#1) 301 and bandwidth part #2 (BWP#2) 302. A base station may configure one or multiple bandwidth parts for a UE, and may configure the following pieces of information with regard to each bandwidth part as given in Table 2 below.

[Table 2]

```
BWP ::=                        SEQUENCE {
    bwp-Id                         BWP-Id,
    (bandwidth part identifier)
    locationAndBandwidth           INTEGER (1..65536),
    (bandwidth part location)
    subcarrierSpacing              ENUMERATED {n0, n1, n2, n3, n4, n5},
    (subcarrier spacing)
    cyclicPrefix                   ENUMERATED { extended }
    (cyclic prefix)
}
```

Obviously, the above example is not limiting, and various parameters related to the bandwidth part may be configured for the UE, in addition to the above configuration information. The base station may transfer the configuration information to the UE through upper layer signaling, for example, radio resource control (RRC) signaling. One configured bandwidth part or at least one bandwidth part among multiple configured bandwidth parts may be activated. Whether or not the configured bandwidth part is activated may be transferred from the base station to the UE semi-statically through RRC signaling, or dynamically through downlink control information (DCI).

According to an embodiment, before a radio resource control (RRC) connection, an initial bandwidth part (BWP) for initial access may be configured for the UE by the base station through a master information block (MIB). More specifically, the UE may receive configuration information regarding a control resource set (CORESET) and a search space which may be used to transmit a PDCCH for receiving system information (which may correspond to remaining system information (RMSI) or system information block 1 (SIB1) necessary for initial access through the MIB in the initial access step. Each of the control resource set and the search space configured through the MIB may be considered identity (ID) 0. The base station may notify the UE of configuration information, such as frequency allocation information, time allocation information, and numerology, regarding control resource region #0 through the MIB. In addition, the base station may notify the UE of configuration information regarding the monitoring cycle and occasion with regard to control resource set #0, that is, configuration information regarding search space #0, through the MIB. The UE may consider that a frequency domain configured by control resource set #0 acquired from the MIB is an initial bandwidth part for initial access. The ID of the initial bandwidth part may be considered to be 0.

The bandwidth part-related configuration supported by 5G may be used for various purposes.

According to some embodiments, if the bandwidth supported by the UE is smaller than the system bandwidth, this may be supported through the bandwidth part configuration. For example, the base station may configure the frequency location (configuration information 2) of the bandwidth part for the UE, so that the UE can transmit/receive data at a specific frequency location within the system bandwidth.

In addition, according to some embodiments, the base station may configure multiple bandwidth parts for the UE for the purpose of supporting different numerologies. For example, in order to support a UE's data transmission/reception using both a subcarrier spacing of 15kHz and a subcarrier spacing of 30kHz, two bandwidth parts may be configured as subcarrier spacings of 15kHz and 30kHz, respectively. Different bandwidth parts may be subjected to frequency division multiplexing (FDM), and if data is to be transmitted/received at a specific subcarrier spacing, the bandwidth part configured as the corresponding subcarrier spacing may be activated.

In addition, according to some embodiments, the base station may configure bandwidth parts having different sizes of bandwidths for the UE for the purpose of reducing power consumed by the UE. For example, if the UE supports a substantially large bandwidth, for example, 100MHz, and always transmits/receives data with the corresponding bandwidth, a substantially large amount of power consumption may occur. Particularly, it may be substantially inefficient from the viewpoint of power consumption to unnecessarily monitor the downlink control channel with a large bandwidth of 100MHz in the absence of traffic. In order to reduce power consumed by the UE, the base station may configure a bandwidth part of a relatively small bandwidth (for example, a bandwidth part of 20MHz) for the UE. The UE may perform a monitoring operation in the 20MHz bandwidth part in the absence of traffic, and may transmit/receive data with the 100MHz bandwidth part as instructed by the base station if data has occurred.

In connection with the bandwidth part configuring method, UEs, before being RRC-connected, may receive configuration information regarding the initial bandwidth part through an MIB in the initial access step. To be more specific, a UE may have a control resource set (CORESET) configured for a downlink control channel which may be used to transmit downlink control information (DCI) for scheduling a system information block (SIB) from the MIB of a physical broadcast channel (PBCH). The bandwidth of the control resource set configured by the MIB may be considered as the initial bandwidth part, and the UE may receive, through the configured initial bandwidth part, a physical downlink shared channel (PDSCH) through which an SIB is transmitted. The initial bandwidth part may be used not only for the purpose of receiving the SIB, but also for other system information (OSI), paging, random access, or the like.

## Bandwidth part (BWP) change

If a UE has one or more bandwidth parts configured therefor, the base station may indicate, to the UE, to change (or switch or transition) the bandwidth parts by using a bandwidth part indicator field inside DCI. As an example, if the currently activated bandwidth part of the UE is bandwidth part #1 301 in FIG. 3, the base station may indicate bandwidth part #2 302 with a bandwidth part indicator inside DCI, and the UE may change the bandwidth part to bandwidth part #2 302 indicated by the bandwidth part indicator inside received DCI.

As described above, DCI-based bandwidth part changing may be indicated by DCI for scheduling a PDSCH or a PUSCH, and thus, upon receiving a bandwidth part change request, the UE needs to be able to receive or transmit the PDSCH or PUSCH scheduled by the corresponding DCI in the changed bandwidth part with no problem. To this end, requirements for the delay time ($T_{BWP}$) required during a bandwidth part change are specified in standards, and may be defined given in Table 3 below, for example.

[Table 3]

| $\mu$ | NR Slot length (ms) | BWP switch delay $T_{BWP}$ (slots) | |
|---|---|---|---|
| | | Type 1[Note 1] | Type 2[Note 1] |
| 0 | 1 | 1 | 3 |
| 1 | 0.5 | 2 | 5 |
| 2 | 0.25 | 3 | 9 |
| 3 | 0.125 | 6 | 18 |
| Note 1: Depends on UE capability. | | | |
| Note 2: If the BWP switch involves changing of SCS, the BWP switch delay is determined by the larger one between the SCS before BWP switch and the SCS after BWP switch. | | | |

The requirements for the bandwidth part change delay time support type 1 or type 2, depending on the capability of the UE. The UE may report the supportable bandwidth part change delay time type to the base station. If the UE has received DCI including a bandwidth part change indicator in slot n, according to the above-described requirement regarding the bandwidth part change delay time, the UE may complete a change to the new bandwidth part indicated by the bandwidth part change indicator at a timepoint not later than slot $n+T_{BWP}$, and may transmit/receive a data channel scheduled by the corresponding DCI in the newly changed bandwidth part. If the base station wants to schedule a data channel by using the new bandwidth part, the base station may determine time domain resource allocation regarding the data channel, based on the UE's bandwidth part change delay time ($T_{BWP}$). That is, when scheduling a data channel by using the new bandwidth part, the base station may schedule the corresponding data channel after the bandwidth part change delay time, in connection with the method for determining time domain resource allocation regarding the data channel. Accordingly, the UE may not expect that the DCI that indicates a bandwidth part change will indicate a slot offset (K0 or K2) value smaller than the bandwidth part change delay time ($T_{BWP}$).

If the UE has received DCI (for example, DCI format 1_1 or 0_1) indicating a bandwidth part change, the UE may perform no transmission or reception during a time interval from the third symbol of the slot used to receive a PDCCH including the corresponding DCI to the start point of the slot indicated by a slot offset (K0 or K2) value indicated by a time domain resource allocation indicator field in the corresponding DCI. For example, if the UE has received DCI indicating a bandwidth part change in slot n, and if the slot offset value indicated by the corresponding DCI is K, the UE may perform no transmission or reception from the third symbol of slot n to the symbol before slot n+K (for example, the last symbol of slot n+K-1).

### SS/PBCH block

Next, synchronization signal (SS)/PBCH blocks in 5G will be described.

An SS/PBCH block may refer to a physical layer channel block including a primary synchronization signal (PSS), a secondary synchronization signal (SSS), and a PBCH. Details thereof are as follows.

- PSS: a signal which becomes a reference of downlink time/frequency synchronization, and provides partial information of a cell ID.
- SSS: becomes a reference of downlink time/frequency synchronization, and provides remaining cell ID information not provided by the PSS. Additionally, the SSS may serve as a reference signal for PBCH demodulation of a PBCH.
- PBCH: provides an MIB which is mandatory system information necessary for the UE to transmit/receive data channels and control channels. The mandatory system information may include search space-related control information indicating a control channel's radio resource mapping information, scheduling control information regarding a separate data channel for transmitting system information, and the like.
- SS/PBCH block: the SS/PBCH block includes a combination of a PSS, an SSS, and a PBCH. One or multiple SS/PBCH blocks may be transmitted within a time period of 5 ms, and each transmitted SS/PBCH block may be distinguished by an index.

The UE may detect the PSS and the SSS in the initial access stage, and may decode the PBCH. The UE may acquire an MIB from the PBCH, and this may be used to configure control resource set (CORESET) #0 (which may correspond to a control resource set having a control resource set index of 0). The UE may monitor control resource set #0 by assuming that the demodulation reference signal (DMRS) transmitted in the selected SS/PBCH block and control resource set #0 are quasi-co-located (QCL). The UE may receive system information with downlink control information transmitted in control resource set #0. The UE may acquire configuration information related to a random access channel (RACH) necessary for initial access from the received system information. The UE may transmit a physical RACH (PRACH) to the base station in consideration of a selected SS/PBCH index, and the base station, upon receiving the PRACH, may acquire information regarding the SS/PBCH block index selected by the UE. The base station may know which block the UE has selected from respective SS/PBCH blocks, and the fact that control resource set #0 associated therewith is monitored.

### PDCCH: regarding DCI

Next, downlink control information (DCI) in a 5G system will be described in detail.

In a 5G system, scheduling information regarding uplink data (or physical uplink shared channel (PUSCH)) or downlink data (or physical downlink shared channel (PDSCH)) is included in DCI and transferred from a base station to a UE through the DCI. The UE may monitor, with regard to the PUSCH or PDSCH, a fallback DCI format and a non-fallback DCI format. The fallback DCI format may include a fixed field predefined between the base station and the UE, and the non-fallback DCI format may include a configurable field.

The DCI may be subjected to channel coding and modulation processes and then transmitted through a physical downlink control channel (PDCCH) after a channel coding and modulation process. A cyclic redundancy check (CRC) may be attached to the payload of a DCI message, and the CRC may be scrambled by a radio network temporary identifier (RNTI) corresponding to the identity of the UE. Different RNTIs may be used according to the purpose of the DCI message, for example, UE-specific data transmission, power control command, or random access response. That is, the RNTI may not be explicitly transmitted, but may be transmitted while being included in a CRC calculation process. Upon receiving a DCI message transmitted through the PDCCH, the UE may identify the CRC by using the allocated RNTI, and if the CRC identification result is right, the UE may know that the corresponding message has been transmitted to the UE.

For example, DCI for scheduling a PDSCH regarding system information (SI) may be scrambled by an SI-RNTI.

DCI for scheduling a PDSCH regarding a random access response (RAR) message may be scrambled by an RA-RNTI. DCI for scheduling a PDSCH regarding a paging message may be scrambled by a P-RNTI. DCI for notifying of a slot format indicator (SFI) may be scrambled by an SFI-RNTI. DCI for notifying of transmit power control (TPC) may be scrambled by a TPC-RNTI. DCI for scheduling a UE-specific PDSCH or PUSCH may be scrambled by a cell RNTI (C-RNTI).

DCI format 0_0 may be used as fallback DCI for scheduling a PUSCH, and in this case, the CRC may be scrambled by a C-RNTI. DCI format 0_0 in which the CRC is scrambled by a C-RNTI may include the following pieces of information given in Table 4 below, for example.

[Table 4]

| |
|---|
| - Identifier for DCI formats - [1] bit |
| - Frequency domain resource assignment- $[\lceil \log_2(N_{RB}^{UL,BWP}(N_{RB}^{UL,BWP}+1)/2) \rceil]$ bits |
| - Time domain resource assignment - X bits |
| - Frequency hopping flag - 1 bit. |
| - Modulation and coding scheme - 5 bits |
| - New data indicator - 1 bit |
| - Redundancy version - 2 bits |
| - HARQ process number - 4 bits |
| - Transmit power control (TPC) command for scheduled PUSCH - [2] bits |
| - Uplink/ supplementary uplink (UL/SUL) indicator - 0 or 1 bit |

DCI format 0_1 may be used as non-fallback DCI for scheduling a PUSCH, and in this case, the CRC may be scrambled by a C-RNTI. DCI format 0_1 in which the CRC is scrambled by a C-RNTI may include the following pieces of information given in Table 5 below, for example.

[Table 5]

| |
|---|
| - Carrier indicator - 0 or 3 bits |
| - UL/SUL indicator - 0 or 1 bit |
| - Identifier for DCI formats - [1] bits |
| - Bandwidth part indicator - 0, 1 or 2 bits |
| - Frequency domain resource assignment |
|       • For resource allocation type 0, $\lceil N_{RB}^{UL,BWP}/P \rceil$ bits |
|       • For resource allocation type 1, $\lceil \log_2(N_{RB}^{UL,BWP}(N_{RB}^{UL,BWP}+1)/2) \rceil$ bits |
| - Time domain resource assignment -1, 2, 3, or 4 bits |
| - Virtual resource block (VRB)-to-physical resource block (PRB) mapping - 0 or 1 bit, only for resource allocation type 1. |
|       • 0 bit if only resource allocation type 0 is configured; |
|       • 1 bit otherwise. |
| - Frequency hopping flag - 0 or 1 bit, only for resource allocation type 1. |
|       • 0 bit if only resource allocation type 0 is configured; |
|       • 1 bit otherwise. |
| - Modulation and coding scheme - 5 bits |
| - New data indicator - 1 bit |
| - Redundancy version - 2 bits |
| - HARQ process number - 4 bits |
| - 1st downlink assignment index- 1 or 2 bits |
|       • 1 bit for semi-static HARQ-ACK codebook; |
|       • 2 bits for dynamic HARQ-ACK codebook with single HARQ-ACK codebook. |
| - 2nd downlink assignment index - 0 or 2 bits |
|       • 2 bits for dynamic HARQ-ACK codebook with two HARQ-ACK sub-codebooks; |
|       • 0 bit otherwise. |

(continued)

- TPC command for scheduled PUSCH - 2 bits

- SRS resource indicator - $\left\lceil \log_2\left(\sum_{k=1}^{L_{max}}\binom{N_{SRS}}{k}\right)\right\rceil$ or $\left\lceil \log_2(N_{SRS})\right\rceil$ bits

   • $\left\lceil \log_2\left(\sum_{k=1}^{L_{max}}\binom{N_{SRS}}{k}\right)\right\rceil$ bits for non-codebook based PUSCH transmission;

   • $\left\lceil \log_2(N_{SRS})\right\rceil$ bits for codebook based PUSCH transmission.

- Precoding information and number of layers - up to 6 bits
- Antenna ports - up to 5 bits
- SRS request - 2 bits
- Channel state information (CSI) request - 0, 1, 2, 3, 4, 5, or 6 bits
- Code block group (CBG) transmission information - 0, 2, 4, 6, or 8 bits
- Phase tracking reference signal (PTRS)-demodulation reference signal (DDMRS) association - 0 or 2 bits.
- beta_offset indicator - 0 or 2 bits
- DMRS sequence initialization - 0 or 1 bit

DCI format 1_0 may be used as fallback DCI for scheduling a PDSCH, and in this case, the CRC may be scrambled by a C-RNTI. DCI format 1_0 in which the CRC is scrambled by a C-RNTI may include the following pieces of information given in Table 6 below, for example.

[Table 6]

- Identifier for DCI formats - [1] bit

- Frequency domain resource assignment- $\left\lceil \lceil \log_2(N_{RB}^{DL,\,BWP}\,(N_{RB}^{DL,\,BWP}+1)/2)\rceil \right\rceil$ bits
- Time domain resource assignment - X bits
- VRB-to-PRB mapping - 1 bit.
- Modulation and coding scheme - 5 bits
- New data indicator - 1 bit
- Redundancy version - 2 bits
- HARQ process number - 4 bits
- Downlink assignment index - 2 bits
- TPC command for scheduled PUCCH - [2] bits
- Physical uplink control channel (PUCCH) resource indicator - 3 bits
- PDSCH-to-HARQ feedback timing indicator - [3] bits

DCI format 1_1 may be used as non-fallback DCI for scheduling a PDSCH, and in this case, the CRC may be scrambled by a C-RNTI. DCI format 1_1 in which the CRC is scrambled by a C-RNTI may include the following pieces of information given in Table 7 below, for example.

[Table 7]

- Carrier indicator - 0 or 3 bits
- Identifier for DCI formats - [1] bits
- Bandwidth part indicator - 0, 1 or 2 bits
- Frequency domain resource assignment

   • For resource allocation type 0, $\left\lceil N_{RB}^{DL,\,BWP}/P\right\rceil$ bits

   • For resource allocation type 1, $\left\lceil \log_2(N_{RB}^{DL,\,BWP}\,(N_{RB}^{DL,\,BWP}+1)/2)\right\rceil$ bits
- Time domain resource assignment -1, 2, 3, or 4 bits
- VRB-to-PRB mapping - 0 or 1 bit, only for resource allocation type 1.

(continued)

> • 0 bit if only resource allocation type 0 is configured;
>
> • 1 bit otherwise.
>
> - Physical resource block (PRB) bundling size indicator - 0 or 1 bit
> - Rate matching indicator - 0, 1, or 2 bits
> - Zero power (ZP) channel state information (CSI)-reference signal (RS) trigger - 0, 1, or 2 bits
>
> For transport block 1:
> - Modulation and coding scheme - 5 bits
> - New data indicator - 1 bit
> - Redundancy version - 2 bits
>
> For transport block 2:
> - Modulation and coding scheme - 5 bits
> - New data indicator - 1 bit
> - Redundancy version - 2 bits
> - HARQ process number - 4 bits
> - Downlink assignment index - 0 or 2 or 4 bits
> - TPC command for scheduled PUCCH - 2 bits
> - PUCCH resource indicator - 3 bits
> - PDSCH-to-HARQ_feedback timing indicator - 3 bits
> - Antenna ports - 4, 5 or 6 bits
> - Transmission configuration indication - 0 or 3 bits
> - SRS request - 2 bits
> - CBG transmission information - 0, 2, 4, 6, or 8 bits
> - CBG flushing out information - 0 or 1 bit
> - DMRS sequence initialization - 1 bit

## PDCCH: CORESET, **REG, CCE, and Search Space**

Hereinafter, a downlink control channel in a 5G communication system will be described in more detail with reference to the accompanying drawings.

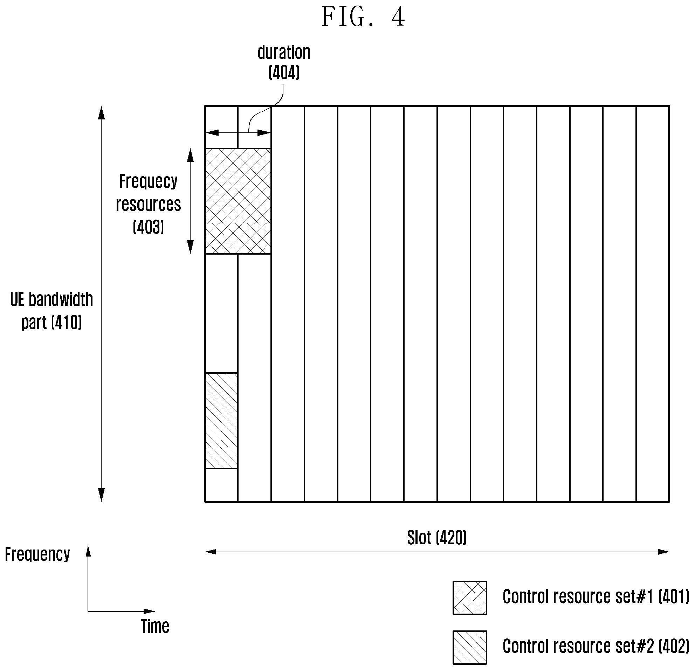

FIG. 4 illustrates an example of a control resource set (CORESET) used to transmit a downlink control channel in a 5G wireless communication system. FIG. 4 illustrates an example in which a UE bandwidth part 410 is configured along the frequency axis, and two control resource sets (control resource set #1 401 and control resource set #2 402) are configured within one slot 420 along the time axis. The control resource sets 401 and 402 may be configured in a specific frequency resource 410 within the entire UE bandwidth part 403 along the frequency axis. The control resource sets 401 and 402 may be each configured as one or multiple OFDM symbols along the time domain, and the number of the OFDM symbols may be defined as a control resource set duration 404. Referring to the example illustrated in FIG. 4, control resource set #1 401 is configured to have a control resource set duration corresponding to two symbols, and control resource set #2 402 is configured to have a control resource set duration corresponding to one symbol.

A control resource set in 5G described above may be configured for a UE by a base station through upper layer signaling (for example, system information, master information block (MIB), radio resource control (RRC) signaling). The description that a control resource set is configured for a UE means that information such as a control resource set identity, the control resource set's frequency location, and the control resource set's symbol duration is provided. For example, the control resource set may include the following pieces of information: given in Table 8 below.

[Table 8]

```
ConControlResourceSet ::=                    SEQUENCE {
      -- Corresponds to L1 parameter 'CORESET-ID'

      controlResourceSetId              ControlResourceSetId,
         (control resource set identity)
      frequencyDomainResources          BIT STRING (SIZE (45)),
         (frequency domain resource assignment information)
      duration                          INTEGER (1..maxCoReSetDuration),
         (time domain resource assignment information)
      cce-REG-MappingType                       CHOICE {
         (CCE-to-REG mapping type)
         interleaved                    SEQUENCE {

            reg-BundleSize                 ENUMERATED {n2, n3, n6},
               (REG bundle size)


            precoderGranularity            ENUMERATED {sameAsREG-
      bundle, allContiguousRBs},


            interleaverSize                ENUMERATED {n2, n3, n6}

         (interleaver size)


            shiftIndex                     INTEGER(0..maxNrofPhysicalR
      esourceBlocks-1)                     OPTIONAL
               (interleaver shift)
               },
         nonInterleaved                 NULL
         },
      tci-StatesPDCCH                    SEQUENCE(SIZE (1..maxNrof
      TCI-StatesPDCCH)) OF TCI-StateId         OPTIONAL,
         (QCL configuration information)
      tci-PresentInDCI                   E N U M E R A T E D  { e n a b l e d }

      }
}
```

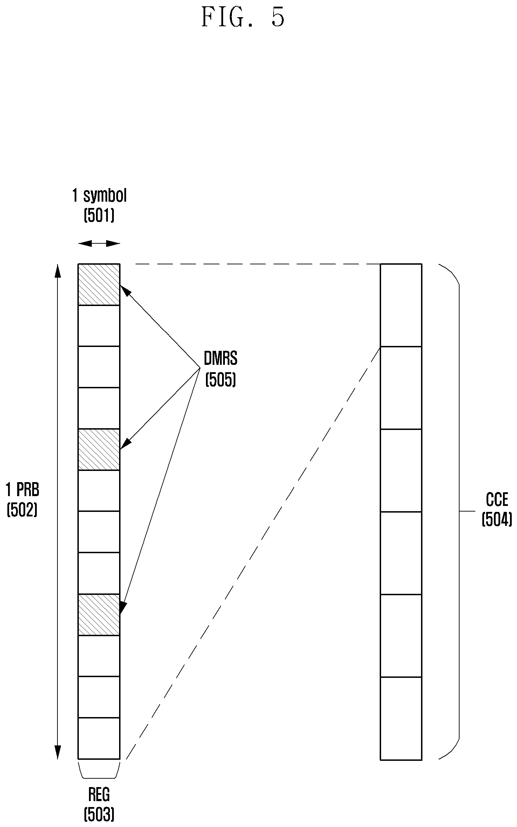

In Table 8, tci-StatesPDCCH (simply referred to as transmission configuration indication (TCI) state) configuration information may include information of one or multiple SS/PBCH block indexes or channel state information reference signal (CSI-RS) indexes, which are quasi-co-located (OCLed) with a DMRS transmitted in a corresponding control resource set. FIG. 5 illustrates an example of a basic unit of time and frequency resources constituting a downlink control channel available in a 5G system according to an embodiment of the disclosure.

According to FIG. 5, the basic unit of time and frequency resources constituting a control channel may be referred to as a resource element group (REG) 503, and the REG 503 may be defined by one OFDM symbol 501 along the time axis and one physical resource block (PRB) 502, that is, 12 subcarriers, along the frequency axis. The base station may configure a downlink control channel allocation unit by concatenating the REGs 503.

Provided that the basic unit of downlink control channel allocation in 5G is a control channel element 504 as illustrated in FIG. 5, one CCE 504 may include multiple REGs 503. To describe the REG 503 illustrated in FIG. 5, for example, the REG 503 may include 12 REs, and if one CCE 504 includes six REGs 503, one CCE 504 may then include 72 REs. A downlink control resource set, once configured, may include multiple CCEs 504, and a specific downlink control channel may be mapped to one or multiple CCEs 504 and then transmitted according to the aggregation level (AL) in the control resource set. The CCEs 504 in the control resource set are distinguished by numbers, and the numbers of CCEs 504 may be allocated according to a logical mapping scheme.

The basic unit of the downlink control channel illustrated in FIG. 5, that is, the REG 503, may include both REs to which DCI is mapped, and an area to which a reference signal (DMRS 505) for decoding the same is mapped. As in FIG.

5A, three DRMSs 503 may be transmitted inside one REG 505. The number of CCEs necessary to transmit a PDCCH may be 1, 2, 4, 8, or 16 according to the aggregation level (AL), and different number of CCEs may be used to implement link adaption of the downlink control channel. For example, in the case of AL=L, one downlink control channel may be transmitted through L CCEs. The UE needs to detect a signal while being no information regarding the downlink control channel, and thus a search space indicating a set of CCEs has been defined for blind decoding. The search space is a set of downlink control channel candidates including CCEs which the UE needs to attempt to decode at a given AL, and since 1, 2, 4, 8, or 16 CCEs may constitute a bundle at various ALs, the UE may have multiple search spaces. A search space set may be defined as a set of search spaces at all configured aggregation levels.

Search spaces may be classified into common search spaces and UE-specific search spaces. A group of UEs or all UEs may search a common search space of the PDCCH in order to receive cell-common control information such as dynamic scheduling regarding system information or a paging message. For example, PDSCH scheduling allocation information for transmitting an SIB including a cell operator information or the like may be received by searching the common search space of the PDCCH. In the case of a common search space, a group of UEs or all UEs need to receive the PDCCH, and the common search space may thus be defined as a predetermined set of CCEs. Scheduling allocation information regarding a UE-specific PDSCH or PUSCH may be received by searching the UE-specific search space of the PDCCH. The UE-specific search space may be defined UE-specifically as a function of various system parameters and the identity of the UE.

In 5G, parameters for a search space regarding a PDCCH may be configured for the UE by the base station through upper layer signaling (for example, SIB, MIB, or RRC signaling). For example, the base station may provide the UE with configurations such as the number of PDCCH candidates at each aggregation level L, the monitoring cycle regarding the search space, the monitoring occasion with regard to each symbol in a slot regarding the search space, the search space type (common search space or UE-specific search space), a combination of an RNTI and a DCI format to be monitored in the corresponding search space, a control resource set index for monitoring the search space, and the like. For example, the control resource set may include the following pieces of information: given in Table 9 below.

[Table 9]

| SearchSpace ::= SEQUENCE { |
| --- |
| -- Identity of the search space. SearchSpaceId = 0 identifies the SearchSpace configured via PBCH (MIB) or ServingCellConfigCommon. |
| searchSpaceId SearchSpaceId, |
| (search space identity) |
| controlResourceSetId ControlResourceSetId, |
| (control resource set identity) |
| monitoringSlotPeriodicityAndOffset CHOICE { |
| (monitoring slot level periodicity) |

```
        sl1                              NULL,

        sl2                              INTEGER  (0..1),

        sl4                              INTEGER  (0..3),

        sl5                          INTEGER  (0..4),

        sl8                              INTEGER  (0..7),

        sl10                             INTEGER  (0..9),

        sl16                             INTEGER  (0..15),

        sl20                             INTEGER  (0..19)

    }

                            OPTIONAL,

    duration (monitoring duration)              INTEGER  (2..2559)

    monitoringSymbolsWithinSlot                 BIT  STRING  (SIZE  (14))
                                        OPTIONAL,

    (monitoring symbols within slot)

    nrofCandidates                  SEQUENCE  {

    (number of PDCCH candidates for each aggregation level)

        aggregationLevel1               ENUMERATED  {n0, n1, n2, n3, n4,

n5, n6, n8},

        aggregationLevel2               ENUMERATED  {n0, n1, n2, n3, n4,

n5, n6, n8},

        aggregationLevel4               ENUMERATED  {n0, n1, n2, n3, n4,

n5, n6, n8},

        aggregationLevel8               ENUMERATED  {n0, n1, n2, n3, n4,

n5, n6, n8},

        aggregationLevel16              ENUMERATED  {n0, n1, n2, n3, n4,

n5, n6, n8}

    },


    searchSpaceType                 CHOICE  {

    (search space type)

        -- Configures this search space as common search space (CSS) and DCI formats

to monitor.

        common                              SEQUENCE  {
```

```
(common search space)

    }

    ue-Specific                      SEQUENCE {

(UE-specific search space)

        -- Indicates whether the UE monitors in this USS for DCI formats 0-0 and 1-0 or

for formats 0-1 and 1-1.

        formats                         ENUMERATED  {formats0-0-And-1

-0,  formats0-1-And-1-1},

    ...

    }
```

According to configuration information, the base station may configure one or multiple search space sets for the UE. According to some embodiments, the base station may configure search space set 1 and search space set 2 for the UE, may configure DCI format A scrambled by an X-RNTI to be monitored in a common search space in search space set 1, and may configure DCI format B scrambled by a Y-RNTI to be monitored in a UE-specific search space in search space set 2. According to configuration information, one or multiple search space sets may exist in a common search space or a UE-specific search space. For example, search space set #1 and search space set #2 may be configured as a common search space, and search space set #3 and search space set #4 may be configured as a UE-specific search space.

Combinations of DCI formats and RNTIs given below may be monitored in a common search space. Obviously, the examples given below are not limiting.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

Combinations of DCI formats and RNTIs given below may be monitored in a UE-specific search space. Obviously, the examples given below are not limiting.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

Enumerated RNTIs may follow the definition and usage given below.

Cell RNTI (C-RNTI): used to schedule a UE-specific PDSCH
Temporary cell RNTI (TC-RNTI): used to schedule a UE-specific PDSCH
Configured scheduling RNTI (CS-RNTI): used to schedule a semi-statically configured UE-specific PDSCH
Random access RNTI (RA-RNTI): used to schedule a PDSCH in a random access step
Paging RNTI (P-RNTI): used to schedule a PDSCH in which paging is transmitted
System information RNTI (SI-RNTI): used to schedule a PDSCH in which system information is transmitted
Interruption RNTI (INT-RNTI): used to indicate whether a PDSCH is punctured
Transmit power control for PUSCH RNTI (TPC-PUSCH-RNTI): used to indicate a power control command regarding a PUSCH
Transmit power control for PUCCH RNTI (TPC-PUCCH-RNTI): used to indicate a power control command regarding a PUCCH
Transmit power control for SRS RNTI (TPC-SRS-RNTI): used to indicate a power control command regarding an SRS
The DCI formats enumerated above may follow the definitions given in Table 10 below, for example.

Table 10]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM s ymbol(s) where UE may assume no transmission is inte nded for the UE |
| 2_2 | Transmission of TPC commands for PUCCH and PUSC H |
| 2_3 | Transmission of a group of TPC commands for SRS tr ansmissions by one or more UEs |

In 5G, the search space at aggregation level L in connection with CORESET p and search space set s may be expressed by Equation 1 below.

[Equation 1]

$$L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) mod \left\lfloor \frac{N_{CCE,p}}{L} \right\rfloor \right\} + i$$

- $L$: aggregation level
- $n_{CI}$: carrier index
- $N_{CCE,p}$: total number of CCEs existing in control resource set$p$
- $n_{s,f}^{\mu}$ : slot index
- $M_{s,max}^{(L)}$ : number of PDCCH candidates at aggregation level L
- $m_{s,n_{CI}} = 0, \ldots, M_{s,max}^{(L)} -1$ : PDCCH candidate index at aggregation level L
- $i = 0, ..., L$ -1
- $Y_{p,n_{s,f}^{\mu}} = \left( A_p \cdot Y_{p,n_{s,f}^{\mu}-1} \right) mod D$ , $Y_{p,-1} = n_{RNTI} \neq 0$, $A_p = 39827$ $for p mod 3 = 0$ , $A_p = 39829$ $for p mod 3 = 1$ , $A_p = 39839$ $for p mod 3 = 2$, $D = 65537$
- $n_{RNTI}$: UE identity

The $Y_{p,n_{s,f}^{\mu}}$ value may correspond to 0 in the case of a common search space.

The $Y_{p,n_{s,f}^{\mu}}$ value may correspond to a value changed by the UE's identity (C-RNTI or ID configured for the UE by the base station) and the time index in the case of a UE-specific search space.

In 5G, multiple search space sets may be configured by different parameters (for example, parameters in Table 9), and the group of search space sets monitored by the UE at each timepoint may differ accordingly. For example, if search space set #1 is configured at by X-slot cycle, if search space set #2 is configured at by Y-slot cycle, and if X and Y are different, the UE may monitor search space set #1 and search space set #2 both in a specific slot, and may monitor one of search space set #1 and search space set #2 both in another specific slot.

**Regarding rate matching/puncturing**

Hereinafter, a rate matching operation and a puncturing operation will be described in detail.

If time and frequency resource A to transmit symbol sequence A overlaps time and frequency resource B, a rate matching or puncturing operation may be considered as an operation of transmitting/receiving channel A in consideration of resource C (region in which resource A and resource B overlap). Specific operations may follow the following description.

**Rate matching operation**

- The base station may transmit channel A after mapping the same only to remaining resource domains other than resource C (area overlapping resource B) among the entire resource A which is to be used to transmit symbol sequence A to the UE. For example, if symbol sequence A is configured as {symbol#1, symbol#2, symbol#3, symbol4}, if resource A is {resource#1, resource#2, resource#3, resource#4}, and if resource B is {resource#3, resource#5}, the UE may receive symbol sequence A based on an assumption that the same has been successfully mapped to remaining resources {resource#1, resource#2, resource#4} other than {resource#3} (corresponding to resource C) among resource A. Consequently, the base station may transmit symbol sequence {symbol#1, symbol#2, symbol#3} after mapping the same to {resource#1, resource#2, resource#4}, respectively.

The UE may assess resource A and resource B from scheduling information regarding symbol sequence A from the base station, thereby assessing resource C (region in which resource A and resource B overlap). The UE may receive symbol sequence A based on an assumption that symbol sequence A has been mapped and transmitted in the remaining area other than resource C among the entire resource A. For example, if symbol sequence A is configured as {symbol#1, symbol#2, symbol#3, symbol4}, if resource A is {resource#1, resource#2, resource#3, resource#4}, and if resource B is {resource#3, resource#5}, the UE may receive symbol sequence A based on an assumption that the same has been successfully mapped to remaining resources {resource#1, resource#2, resource#4} other than {resource#3} (corresponding to resource C) among resource A. Consequently, the UE may perform a series of following receiving operations based on an assumption that symbol sequence {symbol#1, symbol#2, symbol#3} has been transmitted after being mapped to {resource#1, resource#2, resource#4}, respectively.

**Puncturing operation**

If there is resource C (region overlapping resource B) among the entire resource A which is to be used to transmit symbol sequence A to the UE, the base station may map symbol sequence A to the entire resource A, but may not perform transmission in the resource area corresponding to resource C, and may perform transmission with regard to only the remaining resource area other than resource C among resource A. For example, if symbol sequence A is configured as {symbol# 1, symbol#2, symbol#3, symbol4}, if resource A is {resource#1, resource#2, resource#3, resource#4}, and if resource B is {resource#3, resource#5}, the UE may assume that symbol sequence A {symbol#1, symbol#2, symbol#3, symbol4} is mapped to resource A {resource#1, resource#2, resource#3, resource#4}, respectively, but {symbol#3} mapped to {resource#3} (corresponding to resource C) is not transmitted, and based on the assumption that symbol sequence {symbol#1, symbol#2, symbol#4} corresponding to remaining resources {resource#1, resource#2, resource#4} other than {resource#3} (corresponding to resource C) among resource A has been mapped and transmitted, the UE may receive the same. Consequently, the base station may transmit symbol sequence {symbol#1, symbol#2, symbol#4} after mapping the same to {resource#1, resource#2, resource#4}, respectively.

The UE may assess resource A and resource B from scheduling information regarding symbol sequence A from the base station, thereby assessing resource C (region in which resource A and resource B overlap). The UE may receive symbol sequence A, based on an assumption that symbol sequence A has been mapped to the entire resource A but transmitted only in the remaining area other than resource C among the resource area A. For example, if symbol sequence A is configured as {symbol#1, symbol#2, symbol#3, symbol4}, if resource A is {resource#1, resource#2, resource#3, resource#4}, and if resource B is {resource#3, resource#5}, the UE may assume that symbol sequence A {symbol#1, symbol#2, symbol#3, symbol4} is mapped to resource A {resource#1, resource#2, resource#3, resource#4}, respectively, but {symbol#3} mapped to {resource#3} (corresponding to resource C) is not transmitted, and based on the assumption that symbol sequence {symbol#1, symbol#2, symbol#4} corresponding to remaining resources {resource#1, resource#2, resource#4} other than {resource#3} (corresponding to resource C) among resource A has been mapped and transmitted, the UE may receive the same. Consequently, the UE may perform a series of following receiving operations based on an assumption that symbol sequence {symbol#1, symbol#2, symbol#4} has been transmitted after being mapped to {resource#1, resource#2, resource#4}, respectively.

Hereinafter, a method for configuring a rate matching resource for the purpose of rate matching in a 5G communication system will be described. Rate matching refers to adjusting the size of a signal in consideration of the amount of resources that can be used to transmit the signal. For example, data channel rate matching may mean that a data channel is not mapped and transmitted with regard to specific time and frequency resource domains, and the size of data is adjusted accordingly.

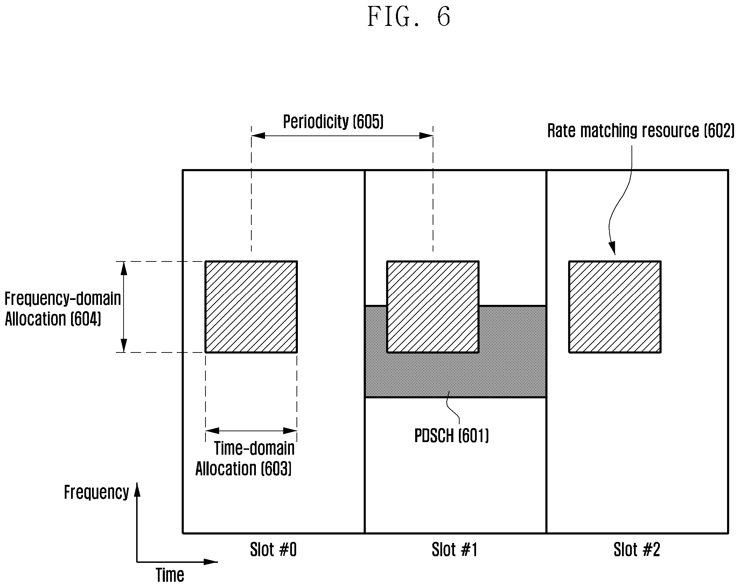

FIG. 6 illustrates a method in which a base station and a UE transmit/receive data in consideration of a downlink data channel and a rate matching resource in a wireless communication system according to an embodiment of the disclosure;

FIG. 6 illustrates a downlink data channel (PDSCH) 601 and a rate matching resource 602. The base station may configure one or multiple rate matching resources 602 for the UE through upper layer signaling (for example, RRC signaling). Rate matching resource 602 configuration information may include time-domain resource allocation information 603, frequency-domain resource allocation information 604, and periodicity information 605. A bitmap corresponding to the frequency-domain resource allocation information 604 will hereinafter be referred to as "first bitmap", a bitmap corresponding to the time-domain resource allocation information 603 will be referred to as "second bitmap", and a bitmap corresponding to the periodicity information 605 will be referred to as "third bitmap". If all or some of time and frequency resources of the scheduled PDSCH 601 overlap a configured rate matching resource 602, the base station may rate-match and transmit the PDSCH 602 in a rate matching resource 601 part, and the UE may perform reception and decoding after assuming that the PDSCH 602 has been rate-matched in a rate matching resource 601 part.

The base station may dynamically notify the UE, through DCI, of whether the PDSCH will be rate-matched in the configured rate matching resource part through an additional configuration (for example, corresponding to "rate matching indicator" inside DCI format described above). Specifically, the base station may select some from the configured rate matching resources and group them into a rate matching resource group, and may indicate, to the UE, whether the PDSCH is rate-matched with regard to each rate matching resource group through DCI by using a bitmap type. For example, if four rate matching resources RMR#1, RMR#2, RMR#3, and RMR#4 are configured, the base station may configure a rate matching groups RMG#1={RMR#1, RMR#2}, RMG#2={RMR#3, RMR#4}, and may indicate, to the UE, whether rate matching occurs in RMG#1 and RMG#2, respectively, through a bitmap by using two bits inside the DCI field. For example, in a case where rate matching is to be conducted, the base station may indicate this case by "1", and in a case where rate matching is not to be conducted, the base station may indicate this case by "0".

5G supports granularity of "RB symbol level" and "RE level" as a method for configuring the above-described rate matching resources for a UE. More specifically, the following configuration method may be followed.

**PDSCH/PUSCH: regarding frequency resource allocation**

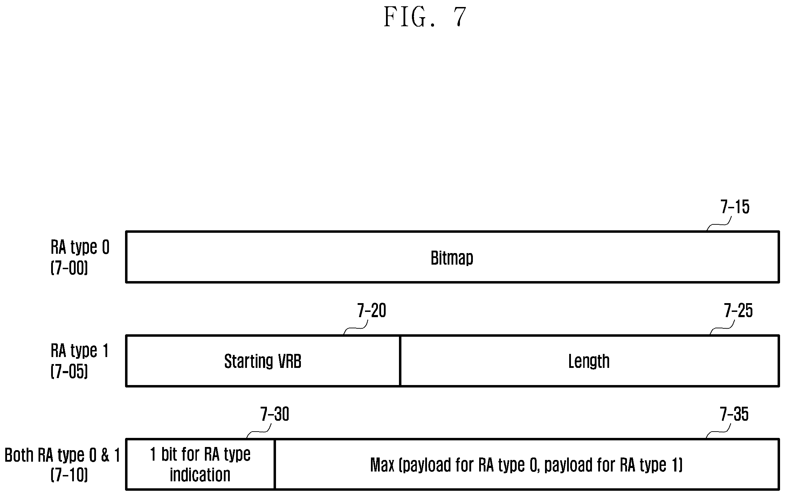

FIG. 7 illustrates an example of frequency domain resource allocation with regard to a physical downlink shared channel (PDSCH) or physical uplink shared channel (PUSCH) in a wireless communication system according to an embodiment of the disclosure.

FIG. 7 illustrates three frequency domain resource allocation methods of type-0 7-00, type-1 7-05, and dynamic switch 7-10 which can be configured through an upper layer in an NR wireless communication system.

Referring to FIG. 7, in the case in which a UE is configured to use only resource type 0 through upper layer signaling (700), partial downlink control information (DCI) for allocating a PDSCH to the UE include a bitmap including $N_{RBG}$ bits. As used herein, $N_{RBG}$ refers to the number of resource block groups (RBGs) determined according to the BWP size allocated by a BWP indicator and upper layer parameter rbg-Size, as in Table 11 below, and data is transmitted in RBGs indicated as "1" by the bitmap.

[Table 11]

| Bandwidth Part Size | Configuration 1 | Configuration 2 |
|---|---|---|
| 1 - 36 | 3 | 4 |
| 37 - 72 | 4 | 8 |
| 73 - 144 | 8 | 16 |
| 145 - 275 | 16 | 16 |

The BWP size refers to the number of RBs included in a BWP. More specifically, if resource allocation type-0 is indicated, the length of a frequency domain resource assignment (FDRA) field of DCI received by the UE is equal to the number $N_{RBG}$ of RBGs, and is $N_{RBG} = \left[ \left( N_{BWP}^{size} + \left( N_{BWP}^{start} \bmod P \right) \right) / P \right]$ .. Here, the first RBG includes $RBG_0^{size} = P - N_{BWP}^{size} \bmod P$ RBs, and the last RBG includes $RBG_{last}^{size} = \left( N_{BWP}^{start} + N_{BWP}^{size} \right) \bmod P$ RBs if $\left( N_{BWP}^{start} + N_{BWP}^{size} \right) \bmod P > 0$ , and otherwise, includes $RBG_{last}^{size} = P$ RBs. The other RBGs each include P RBs. Here, P refers to the number of nominal RBGs as determined according to Table 11. If the UE is configured to use only resource allocation type-1 through higher layer signaling (7-05), some DCI for allocating PDSCHs to the UE may include frequency domain resource allocation information including $[log_2(N_{RB}^{DL,BWP}(N_{RB}^{DL,BWP}+1)/2]$ bits.

Here, $N_{RB}^{BWP}$ denotes the number of RBs included in a BWP. The base station may thereby configure a starting VRB 7-20 and the length 7-25 of a frequency domain resource allocated continuously therefrom.

In the case in which the UE is configured to use both resource allocation type-0 and resource allocation type-1 through upper layer signaling (7-10), partial DCI for allocating a PDSCH to the corresponding UE includes frequency domain resource allocation information including as many bits as the larger value 7-35 between the payload 7-15 for configuring resource allocation type-0 and the payload 7-20 and 7-25 for configuring resource allocation type-1. The conditions for this will be described again later. One bit may be added to the foremost part (MSB) of the frequency domain resource allocation information inside the DCI, and if the bit has the value of "0", use of resource type-0 may be indicated, and if the bit has the value of "1", use of resource type-1 may be indicated.

### PDSCH/PUSCH: regarding time resource allocation

Hereinafter, a time domain resource allocation method regarding a data channel in a next-generation mobile communication system (5G or NR system) will be described.

A base station may configure a table for time domain resource allocation information regarding a physical downlink shared channel (PDSCH) and a physical uplink shared channel (PUSCH) for a UE through upper layer signaling (for example, RRC signaling). A table including a maximum of maxNrofDL-Allocations=16 entries may be configured for the PDSCH, and a table including a maximum of maxNrofUL-Allocations=16 entries may be configured for the PUSCH. In an embodiment, the time domain resource allocation information may include PDCCH-to-PDSCH slot timing (for example, corresponding to a slot-unit time interval between a timepoint at which a PDCCH is received and a timepoint at which a PDSCH scheduled by the received PDCCH is transmitted; labeled K0), PDCCH-to-PUSCH slot timing (for example, corresponding to a slot-unit time interval between a timepoint at which a PDCCH is received and a timepoint at which a PUSCH scheduled by the received PDCCH is transmitted; hereinafter, labeled K2), information regarding the location and length of the start symbol by which a PDSCH or PUSCH is scheduled inside a slot, the mapping type of a PDSCH or PUSCH, and the like. For example, information such as in Table 12 or Table 13 below may be transmitted from the base station to the UE.

[Table 12]

| PDSCH-TimeDomainResourceAllocationList information element |
| --- |
| PDSCH-TimeDomainResourceAllocationList ::=     SEQUENCE (SIZE(1..maxNrofDL-Allocations)) OF PDSCH-TimeDomainResourceAllocation |
| PDSCH-TimeDomainResourceAllocation ::=          SEQUENCE {<br>        k0                                         INTEGER(0..32)<br>    OPTIONAL,      -- Need S<br>          (PDCCH-to-PDSCH timing, slot unit)<br>      mappingType                                ENUMERATED {typeA, typeB},<br>          (PDSCH mapping type)<br>     startSymbolAndLength                        INTEGER (0..127)<br>     (start symbol and length of PDSCH)<br>        } |

[Table 13]

| PUSCH-TimeDomainResourceAllocationList information element |
|---|
| PUSCH-TimeDomainResourceAllocationList ::=    SEQUENCE (SIZE(1..maxNrofUL-Allocations)) OF PUSCH-TimeDomainResourceAllocation<br><br>PUSCH-TimeDomainResourceAllocation ::=        SEQUENCE {<br>        k2                                                                                                  INTEGER(0..32) OPTIONAL,      -- Need S<br>          (PDCCH-to-PUSCH timing, slot unit)<br>            mappingType                                                                    ENUMERATED {typeA, typeB},<br>              (PUSCH mapping type)<br>          startSymbolAndLength                                           INTEGER (0..127)<br>            (start symbol and length of PUSCH)<br>      } |

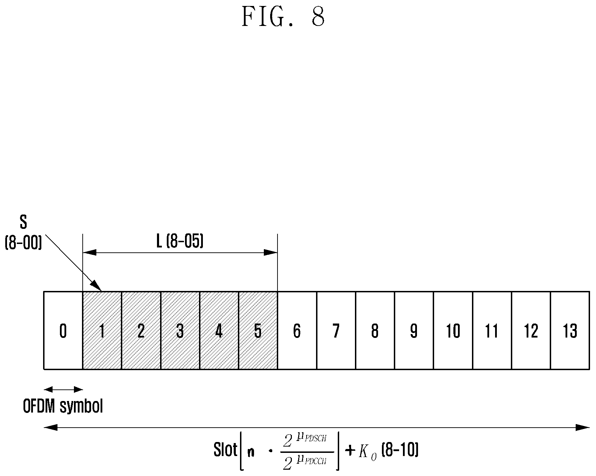

The base station may notify the UF of one of the entries of the table regarding time domain resource allocation information described above through L1 signaling (for example, DCI) (for example, "time domain resource allocation" field in DCI may indicate the same). The UE may acquire time domain resource allocation information regarding a PDSCH or PUSCH, based on the DCI acquired from the base station. FIG. 8 illustrates an example of time domain resource allocation with regard to a PDSCH in a wireless communication system according to an embodiment of the disclosure.

Referring to FIG. 8, the base station may indicate the time domain location of a PDSCH resource according to the subcarrier spacing (SCS) ($\mu_{PDSCH}$, $\mu_{PDCCH}$) of a data channel and a control channel configured by using an upper layer, the scheduling offset (K0) value, and the OFDM symbol start location 800 and length 805 within one slot dynamically indicated through DCI.

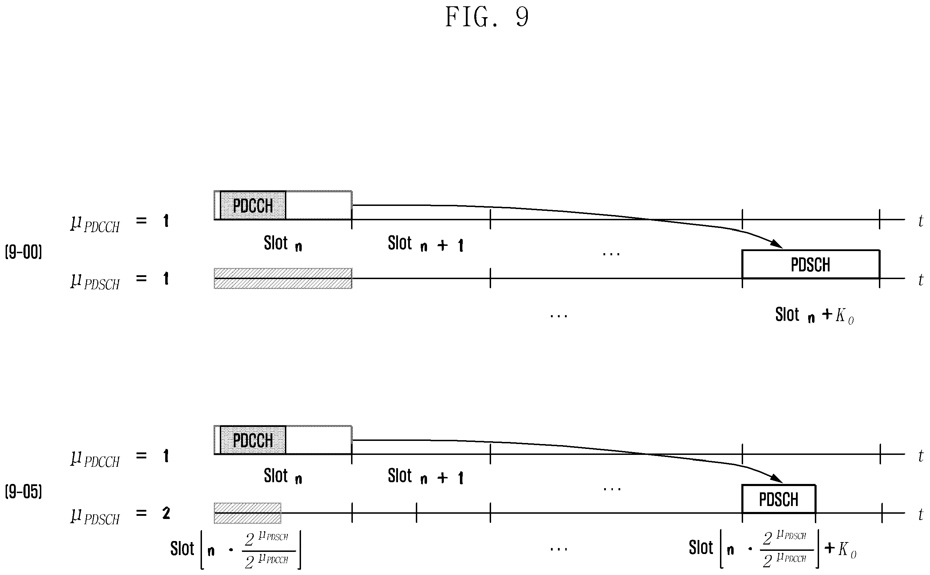

FIG. 9 illustrates an example of time domain resource allocation according to a subcarrier spacing with regard to a data channel and a control channel in a wireless communication system according to an embodiment of the disclosure.

Referring to FIG. 9, if the data channel and the control channel have the same subcarrier spacing (9-00, $\mu_{PDSCH}$ =$\mu_{PDCCH}$), the slot number for data and that for control are identical, and the base station and the UE may accordingly generate a scheduling offset in conformity with a predetermined slot offset K0. On the other hand, if the data channel and the control channel have different subcarrier spacings (9-05, $_{PDSCH} \neq \mu_{PDCCH}$), the slot number for data and that for control are different, and the base station and the UE may accordingly generate a scheduling offset in conformity with a predetermined slot offset K0 with reference to the subcarrier spacing of the PDCCH.

## PUSCH: regarding transmission scheme

Next, a PUSCH transmission scheduling scheme will be described. PUSCH transmission may be dynamically scheduled by a UL grant inside DCI, or operated by means of configured grant Type 1 or Type 2. Dynamic scheduling indication regarding PUSCH transmission may be made by DCI format 0_0 or 0_1.

Configured grant Type 1 PUSCH transmission may be configured semi-statically by receiving configuredGrant-Config including rrc-ConfiguredUplinkGrant in Table 16 through upper signaling, without receiving a UL grant inside DCI. Configured grant Type 2 PUSCH transmission may be scheduled semi-persistently by a UL grant inside DCI after receiving configuredGrantConfig not including rrc-ConfiguredUplinkGrant in Table 14 through upper signaling. If PUSCH transmission is operated by a configured grant, parameters applied to the PUSCH transmission are applied through configuredGrantConfig (upper signaling) in Table 14 except for dataScramblingIdentityPUSCH, txConfig, codebookSubset, maxRank, and scaling of UCI-OnPUSCH, which are provided by pusch-Config (upper signaling) in Table 15. If provided with transformPrecoder inside configuredGrantConfig (upper signaling) in Table 14, the UE applies tp-pi2BPSK inside pusch-Config in Table 15 to PUSCH transmission operated by a configured grant.

[Table 14]

| ConfiguredGrantConfig ::=                SEQUENCE {<br>      frequencyHopping                                            ENUMERATED  {intraSlot,  interSlot} OPTIONAL,      -- Need S,<br>        cg-DMRS-Configuration                            DMRS-UplinkConfig,<br>        mcs-Table                                                    ENUMERATED  {qam256,  qam64LowSE} OPTIONAL,        -- Need S |
|---|

```
        mcs-TableTransformPrecoder              ENUMERATED  {qam256, qam64LowSE}
OPTIONAL,    -- Need S
        uci-OnPUSCH                               SetupRelease  {  CG-UCI-OnPUSCH  }
OPTIONAL,    -- Need M
        resourceAllocation                      ENUMERATED  {  resourceAllocationType0,
resourceAllocationType1, dynamicSwitch },
        rbg-Size                                        ENUMERATED  {config2}
OPTIONAL,    -- Need S
        powerControlLoopToUse          ENUMERATED {n0, n1},
        p0-PUSCH-Alpha                       P0-PUSCH-AlphaSetId,
        transformPrecoder                           ENUMERATED  {enabled,  disabled}
OPTIONAL,    -- Need S
        nrofHARQ-Processes                   INTEGER(1..16),
        repK                                       ENUMERATED {n1, n2, n4, n8},
        repK-RV                                        ENUMERATED  {s1-0231, s2-0303, s3-0000}
OPTIONAL,    -- Need R
        periodicity                                 ENUMERATED {
                                                        sym2,     sym7,    sym1x14,    sym2x14,
sym4x14, sym5x14, sym8x14, sym10x14, sym16x14, sym20x14,
                                                        sym32x14,     sym40x14,     sym64x14,
sym80x14, sym128x14, sym160x14, sym256x14, sym320x14, sym512x14,
                                                        sym640x14,  sym1024x14,  sym1280x14,
sym2560x14, sym5120x14,
                                                        sym6,   sym1x12,   sym2x12,   sym4x12,
sym5x12, sym8x12, sym10x12, sym16x12, sym20x12, sym32x12,
                                                        sym40x12,     sym64x12,     sym80x12,
sym128x12, sym160x12, sym256x12, sym320x12, sym512x12, sym640x12,
                                                        sym1280x12, sym2560x12
        },
        configuredGrantTimer                                    INTEGER   (1..64)
OPTIONAL,    -- Need R
        rrc-ConfiguredUplinkGrant           SEQUENCE {
                timeDomainOffset                    INTEGER (0..5119),
                timeDomainAllocation               INTEGER   (0..15),
                frequencyDomainAllocation      BIT STRING (SIZE(18)),
                antennaPort                             INTEGER (0..31),
                dmrs-SeqInitialization                                  INTEGER   (0..1)
OPTIONAL,    -- Need R
                precodingAndNumberOfLayers      INTEGER (0..63),
                srs-ResourceIndicator                                   INTEGER   (0..15)
OPTIONAL,    -- Need R
                mcsAndTBS                               INTEGER (0..31),
                frequencyHoppingOffset                                 INTEGER   (1..
maxNrofPhysicalResourceBlocks-1)         OPTIONAL,    -- Need R
                pathlossReferenceIndex                 INTEGER (0..maxNrofPUSCH-
PathlossReferenceRSs-1),
        ...
        }
OPTIONAL,    -- Need R
        ...
```

Next, a PUSCH transmission method will be described. The DMRS antenna port for PUSCH transmission is identical to an antenna port for SRS transmission. PUSCH transmission may follow a codebook-based transmission method and a non-codebook-based transmission method according to whether the value of txConfig inside pusch-Config in Table 15, which is upper signaling, is "codebook" or "nonCodebook". As described above, PUSCH transmission may be dynamically scheduled through DCI format 0_0 or 0_1, and may be semi-statically configured by a configured grant. Upon receiving indication of scheduling regarding PUSCH transmission through DCI format 0_0, the UE performs beam configuration for PUSCH transmission by using pucch-spatialRelationInfoID corresponding to a UE-specific PUCCH resource corresponding to the minimum ID inside an activated uplink BWP inside a serving cell, and the PUSCH transmission is based on a single antenna port. The UE does not expect scheduling regarding PUSCH transmission through DCI format 0_0 inside a BWP having no configured PUCCH resource including pucch-spatialRelationInfo. If the UE has no configured txConfig inside pusch-Config in Table 15, the UE does not expect scheduling through DCI format 0_1.

[Table 15]

```
PUSCH-Config ::=                          SEQUENCE {
        dataScramblingIdentityPUSCH                               INTEGER   (0..1023)
OPTIONAL,     -- Need S
        txConfig                          ENUMERATED {codebook, nonCodebook}
OPTIONAL,     -- Need S
        dmrs-UplinkForPUSCH-MappingTypeA        SetupRelease { DMRS-UplinkConfig }
OPTIONAL,     -- Need M
        dmrs-UplinkForPUSCH-MappingTypeB        SetupRelease { DMRS-UplinkConfig }
OPTIONAL,     -- Need M

        pusch-PowerControl                                     PUSCH-PowerControl
OPTIONAL,     -- Need M
        frequencyHopping                      ENUMERATED {intraSlot, interSlot}
OPTIONAL,     -- Need S
        frequencyHoppingOffsetLists        SEQUENCE (SIZE (1..4)) OF INTEGER (1..
maxNrofPhysicalResourceBlocks-1)

OPTIONAL,     -- Need M
        resourceAllocation                ENUMERATED { resourceAllocationType0,
resourceAllocationType1, dynamicSwitch},
        pusch-TimeDomainAllocationList                   SetupRelease { PUSCH-
TimeDomainResourceAllocationList }     OPTIONAL,     -- Need M
        pusch-AggregationFactor                ENUMERATED { n2, n4, n8 }
OPTIONAL,     -- Need S
```

| | |
|---|---|
| mcs-Table | ENUMERATED {qam256, qam64LowSE} |
| OPTIONAL, -- Need S | |
| mcs-TableTransformPrecoder | ENUMERATED {qam256, qam64LowSE} |
| OPTIONAL, -- Need S | |
| transformPrecoder | ENUMERATED {enabled, disabled} |
| OPTIONAL, -- Need S | |
| codebookSubset | ENUMERATED |
| {fullyAndPartialAndNonCoherent, partialAndNonCoherent,nonCoherent} | |
| OPTIONAL, -- Cond codebookBased | |
| maxRank | INTEGER (1..4) |
| OPTIONAL, -- Cond codebookBased | |
| rbg-Size | ENUMERATED { config2} |
| OPTIONAL, -- Need S | |
| uci-OnPUSCH | SetupRelease { UCI-OnPUSCH} |
| OPTIONAL, -- Need M | |
| tp-pi2BPSK | ENUMERATED {enabled} |
| OPTIONAL, -- Need S | |
| ... | |
| } | |

Next, codebook-based PUSCH transmission will be described. The codebook-based PUSCH transmission may be dynamically scheduled through DCI format 0_0 or 0_1, and may be semi-statically operated by a configured grant. If a codebook-based PUSCH is dynamically scheduled through DCI format 0_1 or configured semi-statically by a configured grant, the UE determines a precoder for PUSCH transmission, based on an SRS resource indicator (SRI), a transmission precoding matrix indicator (TPMI), and a transmission rank (the number of PUSCH transmission layers). The SRI may be given through the SRS resource indicator (a field inside DCI) or configured through srs-ResourceIndicator (upper signaling). During codebook-based PUSCH transmission, the UE has at least one SRS resource configured therefor, and may have a maximum of two SRS resources configured therefor. If the UE is provided with the SRI through DCI, the SRS resource indicated by the corresponding SRI refers to the SRS resource corresponding to the SRI, among SRS resources transmitted prior to the PDCCH including the corresponding SRI. In addition, the TPMI and the transmission rank may be given through "precoding information and number of layers" (a field inside DCI) or configured through precodingAndNumberOfLayers (upper signaling). The TPMI is used to indicate a precoder to be applied to PUSCH transmission. If one SRS resource is configured for the UE, the TPMI may be used to indicate a precoder to be applied in the configured one SRS resource. If multiple SRS resources are configured for the UE, the TPMI is used to indicate a precoder to be applied in an SRS resource indicated through the SRI.

The precoder to be used for PUSCH transmission may be selected from an uplink codebook having the same number of antenna ports as the value of nrofSRS-Ports inside SRS-Config (upper signaling). In connection with codebook-based PUSCH transmission, the UE determines a codebook subset, based on codebookSubset inside pusch-Config (upper signaling) and TPMI. The codebookSubset inside pusch-Config (upper signaling) may be configured to be one of "fullyAndPartialAndNonCoherent", "partialAndNonCoherent", or "noncoherent", based on UE capability reported by the UE to the base station. If the UE reported "partialAndNonCoherent'" as UE capability, the UE does not expect that the value of codebookSubset (upper signaling) will be configured as "fullyAndPartialAndNonCoherent". In addition, if the UE reported "nonCoherent" as UE capability, UE does not expect that the value of codebookSubset (upper signaling) will be configured as "fullyAndPartialAndNonCoherent" or "partialAndNonCoherent". If nrofSRS-Ports inside SRS-ResourceSet (upper signaling) indicates two SRS antenna ports, the UE does not expect that the value of codebookSubset (upper signaling) will be configured as "partialAndNonCoherent".

The UE may have one SRS resource set configured therefor, wherein the value of usage inside SRS-ResourceSet (upper signaling) is "codebook", and one SRS resource may be indicated through an SRI inside the corresponding SRS resource set. If multiple SRS resources are configured inside the SRS resource set wherein the value of usage inside SRS-ResourceSet (upper signaling) is "codebook", the UE expects that the value of nrofSRS-Ports inside SRS-Resource (upper signaling) is identical for all SRS resources.

The UE transmits, to the base station, one or multiple SRS resources included in the SRS resource set wherein the value of usage is configured as "codebook" according to upper signaling, and the base station selects one from the SRS resources transmitted by the UE and indicates the UE to be able to transmit a PUSCH by using transmission beam information of the corresponding SRS resource. In connection with the codebook-based PUSCH transmission, the SRI is used as information for selecting the index of one SRS resource, and is included in DCI. Additionally, the base station adds information indicating the rank and TPMI to be used by the UE for PUSCH transmission to the DCI. Using the SRS resource indicated by the SRI, the UE applies, in performing PUSCH transmission, the precoder indicated by the rank and TPMI indicated based on the transmission beam of the corresponding SRS resource, thereby performing PUSCH transmission.

Next, non-codebook-based PUSCH transmission will be described. The non-codebook-based PUSCH transmission may be dynamically scheduled through DCI format 0_0 or 0_1, and may be semi-statically operated by a configured grant. If at least one SRS resource is configured inside an SRS resource set wherein the value of usage inside SRS-ResourceSet (upper signaling) is "nonCodebook", non-codebook-based PUSCH transmission may be scheduled for the UE through DCI format 0_1.

With regard to the SRS resource set wherein the value of usage inside SRS-ResourceSet (upper signaling) is "nonCodebook", one connected NZP CSI-RS resource (non-zero power CSI-RS) may be configured for the UE. The UE may calculate a precoder for SRS transmission by measuring the NZP CSI-RS resource connected to the SRS resource set. If the difference between the last received symbol of an aperiodic NZP CSI-RS resource connected to the SRS resource set and the first symbol of aperiodic SRS transmission in the UE is less than 42 symbols, the UE does not expect that information regarding the precoder for SRS transmission will be updated.

SRS- If the configured value of resourceType inside SRS-ResourceSet (upper signaling) is "aperiodic", the connected NZP CSI-RS may be indicated by an SRS request which is a field inside DCI format 0_1 or 1_1. If the connected NZP CSI-RS resource is an aperiodic NZP CSI-RS resource, the existence of the connected NZP CSI-RS may be indicated with regard to the case in which the value of SRS request (a field inside DCI format 0_1 or 1_1) is not "00". The corresponding DCI should not indicate cross carrier or cross BWP scheduling. In addition, if the value of SRS request indicates the existence of a NZP CSI-RS, the NZP CSI-RS is positioned in the slot used to transmit the PDCCH including the SRS request field. In this case, TCI states configured for the scheduled subcarrier are not configured as QCL-TypeD.

If there is a periodic or semi-persistent SRS resource set configured, the connected NZP CSI-RS may be indicated through associatedCSI-RS inside SRS-ResourceSet (upper signaling). With regard to non-codebook-based transmission, the UE does not expect that spatialRelationInfo which is upper signaling regarding the SRS resource and associatedCSI-RS inside SRS-ResourceSet (upper signaling) will be configured together.

If multiple SRS resources are configured for the UE, the UE may determine a precoder to be applied to PUSCH transmission and the transmission rank, based on an SRI indicated by the base station. The SRI may be indicated through the SRS resource indicator (a field inside DCI) or configured through srs-ResourceIndicator (upper signaling). Similarly to the above-described codebook-based PUSCH transmission, if the UE is provided with the SRI through DCI, the SRS resource indicated by the corresponding SRI refers to the SRS resource corresponding to the SRI, among SRS resources transmitted prior to the PDCCH including the corresponding SRI. The UE may use one or multiple SRS resources for SRS transmission, and the maximum number of SRS resources that can be transmitted simultaneously in the same symbol inside one SRS resource set and the maximum number of SRS resources are determined by UE capability reported to the base station by the UE. SRS resources simultaneously transmitted by the UE occupy the same RB. The UE configures one SRS port for each SRS resource. There may be only one configured SRS resource set wherein the value of usage inside SRS-ResourceSet (upper signaling) is "nonCodebook", and a maximum of four SRS resources may be configured for non-codebook-based PUSCH transmission.

The base station transmits one NZP-CSI-RS connected to the SRS resource set to the UE, and the UE calculates the precoder to be used when transmitting one or multiple SRS resources inside the corresponding SRS resource set, based on the result of measurement when the corresponding NZP-CSI-RS is received. The UE may apply the calculated precoder when transmitting, to the base station, one or multiple SRS resources inside the SRS resource set wherein the configured usage is "nonCodebook", and the base station selects one or multiple SRS resources from the received one or multiple SRS resources. In connection with the non-codebook-based PUSCH transmission, the SRI indicates an index that may express one SRS resource or a combination of multiple SRS resources, and the SRI is included in DCI. The number of SRS resources indicated by the SRI transmitted by the base station may be the number of transmission layers of the PUSCH, and the UE transmits the PUSCH by applying the precoder applied to SRS resource transmission to each layer.

## Regarding CA/DC

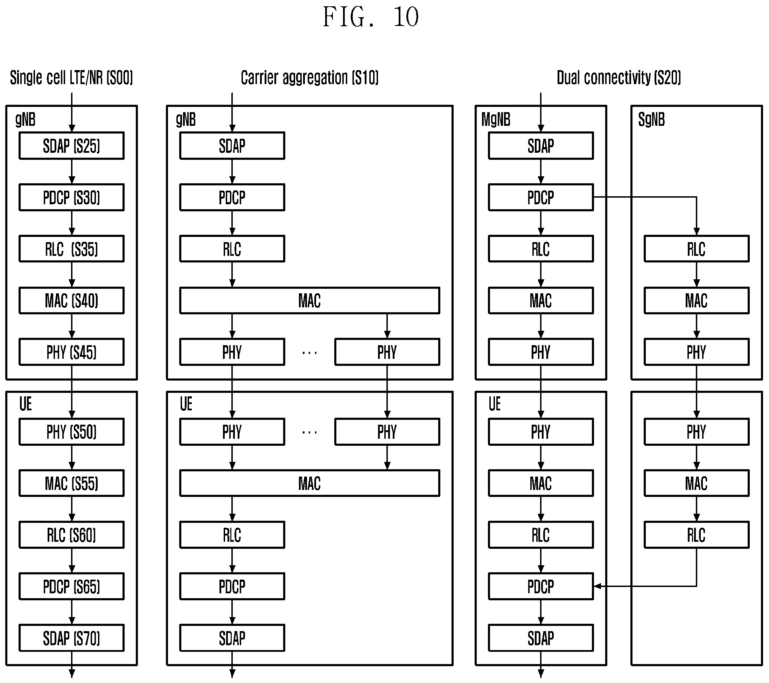

FIG. 10 illustrates radio protocol structures of a base station and a UE in single cell, carrier aggregation, and dual connectivity situations according to an embodiment of the disclosure.

Referring to FIG. 10, the radio protocol of a next-generation mobile communication system includes an NR service data adaptation protocol (SDAP) S25 or S70, an NR packet data convergence protocol (PDCP) S30 or S65, an NR radio link control (RLC) S35 or S60, and an NR medium access controls (MAC) S40 or S55, on each of UE and NR base station sides.

The main functions of the NR SDAP S25 or S70 may include some of functions below.

- Transfer of user plane data
- Mapping between a QoS flow and a DRB for both DL and UL
- Marking QoS flow ID in both DL and UL packets
- Reflective QoS flow to DRB mapping for the UL SDAP PDUs

With regard to the SDAP layer device, the UE may be configured, through an RRC message, whether to use the header of the SDAP layer device or whether to use functions of the SDAP layer device for each PDCP layer device or each bearer or each logical channel, and if an SDAP header is configured, the non-access stratum (NAS) QoS reflection configuration 1-bit indicator (NAS reflective QoS) and the AS QoS reflection configuration 1-bit indicator (AS reflective QoS) of the SDAP header may be indicated so that the UE can update or reconfigure mapping information regarding the QoS flow and data bearer of the uplink and downlink. The SDAP header may include QoS flow ID information indicating the QoS. The QoS information may be used as data processing priority, scheduling information, etc. for smoothly supporting services.

The main functions of the NR PDCP S30 or S65 may include some of functions below.

- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

The above-mentioned reordering of the NR PDCP device refers to a function of reordering PDCP PDUs received from a lower layer in an order based on the PDCP sequence number (SN), and may include a function of transferring data to an upper layer in the reordered sequence. Alternatively, the reordering of the NR PDCP device may include a function of instantly transferring data without considering the order, may include a function of recording PDCP PDUs lost as a result of reordering, may include a function of reporting the state of the lost PDCP PDUs to the transmitting side, and may include a function of requesting retransmission of the lost PDCP PDUs.

The main functions of the NR RLC S35 or S60 may include some of functions below.

- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

The above-mentioned in-sequence delivery of the NR RLC device refers to a function of delivering RLC SDUs, received from the lower layer, to the upper layer in sequence. The in-sequence delivery of the NR RLC device may include a function of reassembling and delivering multiple RLC SDUs received, into which one original RLC SDU has been segmented, may include a function of reordering the received RLC PDUs with reference to the RLC sequence number (SN) or PDCP sequence number (SN), may include a function of recording RLC PDUs lost as a result of reordering, may include a function of reporting the state of the lost RLC PDUs to the transmitting side, and may include a function of requesting retransmission of the lost RLC PDUs. The in-sequence delivery of the NR RLC device may include a function of, if there is a lost RLC SDU, successively delivering only RLC SDUs before the lost RLC SDU to the upper layer, and may include a function of, if a predetermined timer has expired although there is a lost RLC SDU, successively delivering all RLC SDUs received before the timer was started to the upper layer. Alternatively, the in-sequence delivery of the NR RLC device may include a function of, if a predetermined timer has expired although there is a lost RLC SDU, successively delivering all RLC SDUs received until now to the upper layer. In addition, the in-sequence delivery of the NR RLC device may include a function of processing RLC PDUs in the received order (regardless of the sequence number order, in the order of arrival) and delivering same to the PDCP device regardless of the order (out-of-sequence delivery), and may include a function of, in the case of segments, receiving segments which are stored in a buffer or which are to be received later, reconfiguring same into one complete RLC PDU, processing, and delivering same to the PDCP device. The NR RLC layer may include no concatenation function, which may be performed in the NR MAC layer or replaced with a multiplexing function of the NR MAC layer.

The out-of-sequence delivery of the NR RLC device refers to a function of instantly delivering RLC SDUs received from the lower layer to the upper layer regardless of the order, may include a function of, if multiple RLC SDUs received, into which one original RLC SDU has been segmented, are received, reassembling and delivering the same, and may include a function of storing the RLC SN or PDCP SN of received RLC PDUs, and recording RLC PDUs lost as a result of reordering.

The NR MAC S40 or S55 may be connected to multiple NR RLC layer devices configured in one UE, and the main functions of the NR MAC may include some of functions below.

- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

An NR PHY layer S45 or S50 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer.

The detailed structure of the radio protocol structure may be variously changed according to the carrier (or cell) operating scheme. For example, in case that the base station transmits data to the UE, based on a single carrier (or cell), the base station and the UE may use a protocol structure having a single structure with regard to each layer, such as S00. On the other hand, in case that the base station transmits data to the UE, based on carrier aggregation (CA) which uses multiple carriers in a single TRP, the base station and the UE may use a protocol structure which has a single structure up to the RLC, but multiplexes the PHY layer through a MAC layer, such as S10. As another example, in case that the base station transmits data to the UE, based on dual connectivity (DC) which uses multiple carriers in multiple TRPs, the base station and the UE may use a protocol structure which has a single structure up to the RLC, but multiplexes the PHY layer through a MAC layer, such as S20.

Hereinafter, embodiments of the disclosure will be described in detail in conjunction with the accompanying drawings. The contents of the disclosure may be applied to FDD and TDD systems. As used herein, upper signaling (or upper layer signaling) is a method for transferring signals from a base station to a UE by using a downlink data channel of a physical layer, or from the UE to the base station by using an uplink data channel of the physical layer, and may also be referred to as "RRC signaling", "PDCP signaling", or "medium access control (MAC) control element (MAC CE)".

Hereinafter, in the disclosure, the UE may use various methods to determine whether or not to apply cooperative communication, for example, PDCCH(s) that allocates a PDSCH to which cooperative communication is applied have a specific format, or PDCCH(s) that allocates a PDSCH to which cooperative communication is applied include a specific indicator indicating whether or not to apply cooperative communication, or PDCCH(s) that allocates a PDSCH to which cooperative communication is applied are scrambled by a specific RNTI, or cooperative communication application is assumed in a specific range indicated by an upper layer. Hereinafter, it will be assumed for the sake of descriptive convenience that NC-JT case refers to a case in which the UE receives a PDSCH to which cooperative communication is applied, based on conditions similar to those described above.

Hereinafter, determining priority between A and B may be variously described as, for example, selecting an entity having a higher priority according to a predetermined priority rule and performing an operation corresponding thereto, or omitting or dropping operations regarding an entity having a lower priority.

Hereinafter, the above examples may be described through several embodiments, but they are not independent of each other, and one or more embodiments may be applied simultaneously or in combination.

In the following description of the disclosure, upper layer signaling may refer to signaling corresponding to at least one signaling among the following signaling, or a combination of one or more thereof.

- Master information block (MIB)
- System information block (SIB) or SIB X (X=1, 2, ...)
- Radio resource control (RRC)

- Medium access control (MAC) control element (CE)

In addition, L1 signaling may refer to signaling corresponding to at least one signaling method among signaling methods using the following physical layer channels or signaling, or a combination of one or more thereof.

- Physical downlink control channel (PDCCH)
- Downlink control information (DCI)
- UE-specific DCI
- Group common DCI
- Common DCI
- Scheduling DCI (for example, DCI used for the purpose of scheduling downlink or uplink data)
- Non-scheduling DCI (for example, DCI not used for the purpose of scheduling downlink or uplink data)
- Physical uplink control channel (PUCCH)
- Uplink control information (UCI)

Hereinafter, determining priority between A and B may be variously described as, for example, selecting an entity having a higher priority according to a predetermined priority rule and performing an operation corresponding thereto, or omitting or dropping operations regarding an entity having a lower priority.

Hereinafter, the above examples may be described through several embodiments, but they are not independent of each other, and one or more embodiments may be applied simultaneously or in combination.

**Regarding SBFD**

In 3GPP, subband non-overlapping full duplex (SBFD) is being discussed as a new duplex scheme based on NR. SBFD is a technology of using a part of a downlink resource as an uplink resource in a TDD band (spectrum) of a frequency of 6 GHz or below or a frequency of 6 GHz or above to receive uplink transmission from a UE as much as the amount of increased uplink resources so as to expand the uplink coverage of the UE, and receive feedback relating to downlink transmission from the UE in the increased uplink resources so as to reduce feedback delay. In the disclosure, a UE capable of receiving, from a base station, information on whether SBFD is supported, and performing uplink transmission in a part of a downlink resource may be referred to as an SBFD UE (SBFD-capable UE) for convenience. The SBFD scheme may be defined in the standard, and the following schemes may be considered for the SBFD UE to determine whether SBFD is supported in a specific cell (or frequency or frequency band).

First scheme: Other than a frame structure type of a conventional unpaired spectrum (or time division duplex, TDD) or paired spectrum (or frequency division duplex, FDD), another frame structure type (e.g., frame structure type 2) may be introduced in order to define SBFD. The frame structure type 2 may be defined as being supported in the specific frequency or frequency band, or a base station may indicate to a UE whether SBFD is supported by using system information. An SBFD UE may receive the system information including whether SBFD is supported, and determine whether SBFD is supported in the specific cell (or frequency or frequency band).

Second scheme: Without defining a new frame structure type, whether SBFD is additionally supported in a specific frequency or frequency band of a conventional unpaired spectrum (or TDD) may be indicated. The second scheme may define whether SBFD is additionally supported in the specific frequency or frequency band of the conventional unpaired spectrum, or a base station may indicate to a UE whether SBFD is supported by using system information. An SBFD UE may receive the system information including whether SBFD is supported, and determine whether SBFD is supported in the specific cell (or frequency or frequency band).

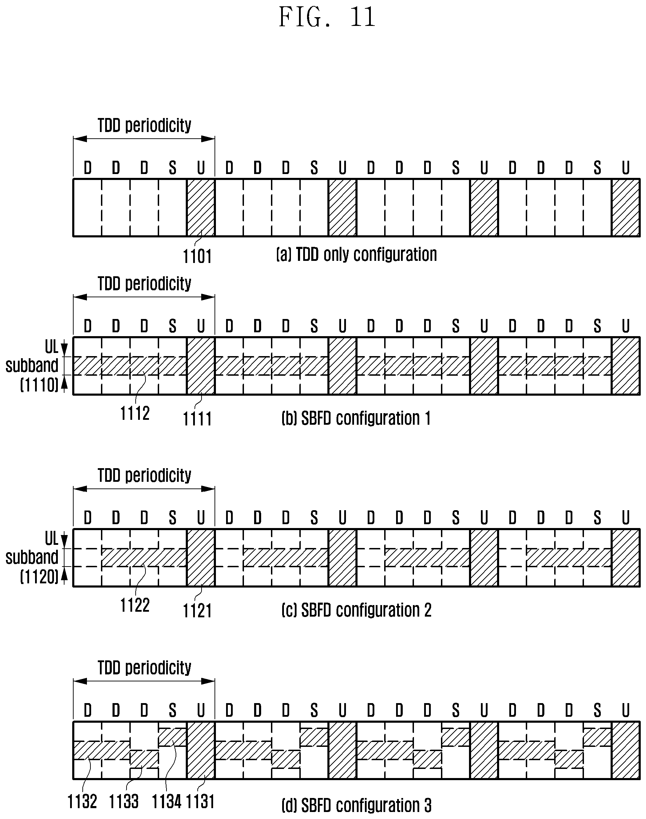

The information on whether SBFD is supported in the first and second schemes may be information (e.g., SBFD resource configuration information in FIG. 11 described later) indirectly indicating whether SBFD is supported, by additionally configuring a part of a downlink resource as an uplink resource in addition to the configuration of TDD uplink (UL)-downlink (DL) resource configuration information indicating a downlink slot (or symbol) resource and an uplink slot (or symbol) resource in TDD, or may be information directly indicating whether SBFD is supported.

In the disclosure, the SBFD UE may receive a synchronization signal block in an initial cell access for accessing a cell (or base station), so as to obtain cell synchronization. A process of obtaining the cell synchronization may be identical or similar for the SBFD UE and an existing TDD UE. Thereafter, the SBFD UE may determine whether the cell supports SBFD, through MIB acquisition, SIB acquisition, or a random access process.

System information for transmitting information on whether SBFD is supported may be system information distinguished from and transmitted separately from system information for a UE (e.g., an existing TDD UE) supporting a different version of protocol in a cell, and the SBFD UE may obtain the entirety or part of the system information transmitted separately from the system information for the existing TDD UE, to determine whether SBFD is supported. When the SBFD UE obtains only the system information for the existing TDD UE or system information indicating that SBFD is not supported, the SBFD UE may determine that the cell (or base station) supports only TDD.

When the information on whether SBFD is supported is included in system information for a UE (e.g., an existing TDD UE) supporting a different version of protocol, the information on whether SBFD is supported may be inserted in the last part of the system information not to affect acquisition of the system information of the existing TDD UE. When the SBFD UE fails to obtain the information on whether SBFD is supported, which is inserted in the last part, or obtains information indicating that SBFD is not supported, the SBFD UE may determine that the cell (or base station) supports only TDD.

When the information on whether SBFD is supported is included in system information for a UE (e.g., an existing TDD UE) supporting a different version of protocol, the information on whether SBFD is supported may be transmitted through a separate PDSCH so as not to affect acquisition of the system information of the existing TDD UE. That is, a non-SBFD-supporting UE may receive a first SIB (or SIB1) including existing TDD-related system information through a first PDSCH. An SBFD-supporting UE may receive the first SIB (or SIB) including the existing TDD-related system information through the first PDSCH, and may receive a second SIB including SBFD-related system information through a second PDSCH. The first PDSCH and the second PDSCH may be scheduled through a first PDCCH and a second PDCCH, and a cyclic redundancy code (CRC) of the first PDCCH and the second PDCCH may be scrambled with the same RNTI (e.g., SI-RNTI). A search space for monitoring the second PDCCH may be obtained from system information of the first PDSCH, and if the same is not obtained (that is, if the system information of the first PDSCH does not include information on the search space), the second PDCCH may be received in the same search space as a search space of the first PDCCH.

As described above, when the SBFD UE determines that the cell (or base station) supports only TDD, the SBFD UE may perform a random access procedure and transmit or receive a data/control signal in the same manner as the existing TDD UE.

A base station may configure a separate random access resource for an existing TDD UE or an SBFD UE (e.g., an SBFD UE supporting duplex communication and an SBFD UE supporting half-duplex communication), and transmit configuration information (e.g., control information or configuration information indicating a time-frequency resource available for a PRACH) on the random access resource to the SBFD UE through system information. The system information for transmitting information on the random access resource may be system information distinguished from and transmitted separately from system information for a UE (e.g., an existing TDD UE) supporting a different version of protocol in a cell.

The base station configures a separate random access resource for each of the SBFD UE and a TDD UE supporting a different version of protocol, thereby being able to distinguish whether the TDD UE supporting the different version of protocol performs a random access or the SBFD UE performs a random access. For example, the separate random access resource configured for the SBFD UE may be a resource that the existing TDD UE determines as a downlink time resource, and the SBFD UE performs a random access through an uplink resource (or separate random access resource) configured in some frequencies of the downlink time resource, so that the base station may determine that the UE which has attempted the random access in the uplink resource is the SBFD UE.

Alternatively, the base station may not configure a separate random access resource for the SBFD UE, and may configure a common random access resource for all UEs in a cell. In this case, the configuration information on the random access resource may be transmitted to all the UEs in the cell through system information, and the SBFD UE having received the system information may perform a random access by using the random access resource. Thereafter, the SBFD UE may complete a random access process to enter an RRC connection mode for transmission or reception of data with the cell. After the RRC connection mode, the SBFD UE may receive, from the base station, a higher layer signal or a physical signal enabling determination that a partial frequency resource of the downlink time resource is configured as an uplink resource, and perform an SBFD operation (e.g., transmit an uplink signal in the uplink resource).

When the SBFD UE determines that the cell supports SBFD, the SBFD UE transmits, to the base station, capability information including at least one of whether the UE supports SBFD, whether the UE supports full-duplex communication or half-duplex communication, and the number of transmission or reception antennas included in (or supported by) the UE, thereby notifying the base station that the UE attempting to access is the SBFD UE. Alternatively, when support of half-duplex communication is necessarily implemented for the SBFD UE, whether the half-duplex communication is supported may be omitted from the capability information. A report of the SBFD UE on the capability information may be reported to the base station through a random access process, may be reported to the base station after completion of the random access process, or may be reported to the base station after entering the RRC connection mode for transmission or reception of the data with the cell.

The SBFD UE may support half-duplex communication in which only uplink transmission or downlink reception is performed at one time like the existing TDD UE, or may support full-duplex communication in which both uplink transmission and downlink reception are performed at one time. Therefore, the SBFD UE may report, to the base station through capability reporting, whether the SBFD UE supports the half-duplex communication or full-duplex communication, and after the reporting, the base station may configure, for the SBFD UE, whether the SBFD UE is to use half-duplex communication for transmission or reception or is to use full-duplex communication for transmission or reception. When the SBFD UE reports the capability for the half-duplex communication to the base station, since a duplexer generally does not exist, a switching gap for changing an RF between transmission and reception may be required in a case of operating in FDD or TDD.

FIG. 11 is a diagram illustrating an example in which SBFD is operated in a TDD band of a wireless communication system according to the disclosure.

Case (a) of FIG. 11 illustrates a case where TDD is operated in a specific frequency band. In a cell operating the TDD, a base station may transmit or receive, to or from an existing TDD UE or an SBFD UE, a signal including data/control information in a downlink slot (or symbol), an uplink slot (or symbol) 1101, and a flexible slot (or symbol), based on a configuration of TDD UL-DL resource configuration information indicating a downlink slot (or symbol) resource and an uplink slot (or symbol) resource of the TDD.

It may be assumed that a DDDSU slot format is configured according to the TDD UL-DL resource configuration information in FIG. 11. Here, "D" is a slot consisting entirely of downlink symbols, "U" is a slot consisting entirely of uplink symbols, and "S" is a slot that is neither "D" nor "U", that is, a slot including a downlink symbol, an uplink symbol, or a flexible symbol. Here, for convenience, S may be assumed to include 12 downlink symbols and two flexible symbols. Further, the DDDSU slot format may be repeated according to the TDD UL-DL resource configuration information. That is, a repetition period of a TDD configuration is 5 slots (5 ms for 15 kHz SCS, 2.5 ms for 30 kHz SCS, etc.).

Next, cases (b), (c), and (d) of FIG. 11 illustrate a case where SBFD is operated together with TDD in a specific frequency band.

Referring to case (b) of FIG. 11, a UE may receive a configuration of a part of a frequency band of a cell as a frequency band 1110 available for uplink transmission. This band may be referred to as an uplink subband (UL subband). Further, the uplink subband (UL subband) may be applied to all symbols of all slots. The UE may transmit an uplink channel or signal scheduled for all symbols 1112 within the subband (UL subband). However, the UE cannot transmit an uplink channel or signal in a band other than the subband (UL subband). In addition, the UE may transmit an uplink channel or signal in an uplink slot (or symbol) 1111.

Referring to case (c) of FIG. 11, the UE may receive a configuration of a part of a frequency band of a cell as a frequency band 1120 available for uplink transmission, and may receive a configuration of a time domain in which the frequency band is activated. This frequency band may be referred to as an uplink subband (UL subband). In case (c) of FIG. 11, the uplink subband (UL subband) is deactivated in a first slot, and the uplink subband (UL subband) may be activated in the remaining slots. Therefore, the UE may transmit an uplink channel or signal in an uplink subband (UL subband) 1122 of the remaining slots. Here, the uplink subband (UL subband) is activated in slot units, but whether the uplink subband is activated may be configured in symbol units. In addition, the UE may transmit an uplink channel or signal in an uplink slot (or symbol) 1121.

Referring to case (d) of FIG. 11, the UE may receive a configuration of a time-frequency resource available for uplink transmission. The UE may receive a configuration of one or more time-frequency resources as a time-frequency resource available for uplink transmission. For example, a partial frequency band 1132 of a first slot and a second slot may be configured as time-frequency resources available for uplink transmission. In addition, a partial frequency band 1133 of a third slot and a partial frequency band 1134 of a fourth slot may be configured as time-frequency resources available for uplink transmission. In addition, the UE may transmit an uplink channel or signal in an uplink slot (or symbol) 1131.

In the following description, a time-frequency resource available for uplink transmission within a downlink symbol or slot may be referred to as an SBFD resource. In addition, a symbol in which an uplink subband is configured within a downlink symbol may be referred to as an SBFD symbol. In addition, a time-frequency resource available for downlink reception within an uplink symbol or slot may be referred to as an SBFD resource. In addition, a symbol in which a downlink subband is configured within an uplink symbol may be referred to as an SBFD symbol. Meanwhile, this is for convenience of description and the disclosure is not limited thereto.

For convenience, in this disclosure, a band in which downlink channel or signal reception is possible, excluding an uplink subband, is referred to as a downlink subband. The UE is able to configure up to one uplink subband and up to two downlink subbands for one symbol. For example, the UE may be receive a configuration of one of {uplink subband, downlink subband}, {downlink subband, uplink subband}, or {first downlink subband, uplink subband, second downlink subband} in the frequency domain.

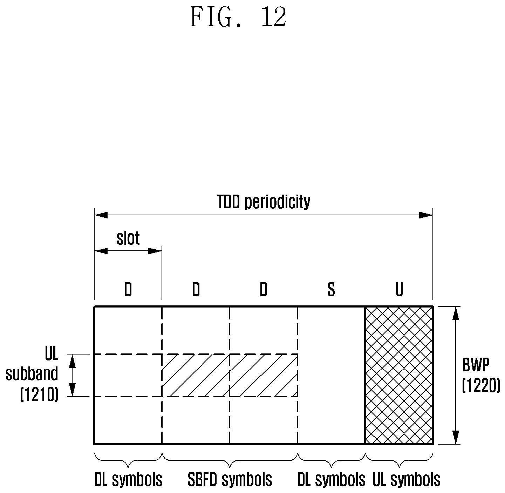

FIG. 12 is a diagram illustrating an SBFD configuration according to an embodiment of the disclosure. The embodiment described in FIG. 12 may be equally applied to other embodiments.

Referring to FIG. 12, a UE may receive a configuration of an uplink symbol, a downlink symbol, or a flexible symbol according to a TDD configuration. Here, all symbols of a "D" slot are downlink symbols. All symbols of a "U" slot are uplink symbols. An "S" slot is a slot that is neither a "D" slot nor a "U" slot. The UE may receive a configuration of a UL BWP 1220. Further, the UE may receive a configuration of a UL subband 1210 within a DL symbol. In addition, the UE may receive a configuration of a slot or symbol to which the UL subband 1210 is to be applied. Referring to FIG. 12, the UL subband may be applied only to some symbols among DL symbols having a TDD periodicity. DL symbols of a second slot and a third slot may have a UL subband applied, but the other DL symbols may not have a UL subband applied. Here, an SBFD symbol may represent a symbol to which the UL subband is applied.

A base station may configure a guard frequency interval between a DL subband and a UL subband for the UE. When the guard frequency interval is configured for the UE, frequency resources in the frequency domain may be divided into a UL subband, a guard frequency interval, and a DL subband. For the purpose of explaining this embodiment, it is assumed that the guard frequency interval is included in the UL subband. That is, in the following description, the expression "if "X" overlaps a UL subband" may be interpreted as "if "X" overlaps a UL subband or a guard frequency interval". In addition, the expression "if "X" overlaps a UL subband" may be interpreted as "if "X" does not overlap a DL subband".

In addition, the expression "if "X" does not overlap a UL subband" may be interpreted as "if "X" does not overlap a UL subband and a guard frequency interval". In addition, the expression "if "X" does not overlap a UL subband" may be interpreted as "if "X" overlaps a DL subband".

The base station may configure, for the UE, a CORESET and a search space to receive a PDCCH in each slot.

In the disclosure, for convenience, a CORESET configuration includes

1) a unique index of a CORESET
2) information on a frequency domain constituting a CORESET
3) the number of symbols constituting a CORESET, and

a search space configuration
may include

1) a unique index of a search space
2) a unique index of an associated CORESET
3) a period and offset of a slot in which a PDCCH is to be monitored
4) a bitmap of a symbol from which a PDCCH monitoring occasion (MO) starts in a slot in which a PDCCH is to be monitored (the bitmap consists of 14 bits, each bit corresponds to a symbol in the slot, and if a bit is 1, the PDCCH MO starts at the corresponding symbol)

For the sake of descriptive convenience, the disclosure uses the expression "CORESET_a/SS_a" or "CORESET_b/SS_b". Here, CORESET_a/SS_a may imply that a CORESET having a unique index of a and search space a having a unique index of a are associated with each other. In addition, CORESET_b/SS_b may imply that a CORESET having a unique index of b and search space b having a unique index of b are associated with each other. In the following description, if CORESET_a and CORESET_b include information on different frequency domains, some of RBs allocated to CORESET_a may overlap frequency domain allocation of an SBFD UL subband according to information on a frequency domain of CORESET_a. However, according to information on a frequency domain of CORESET_b, RBs allocated to CORESET_b do not overlap the frequency domain allocation of the SBFD UL subband.

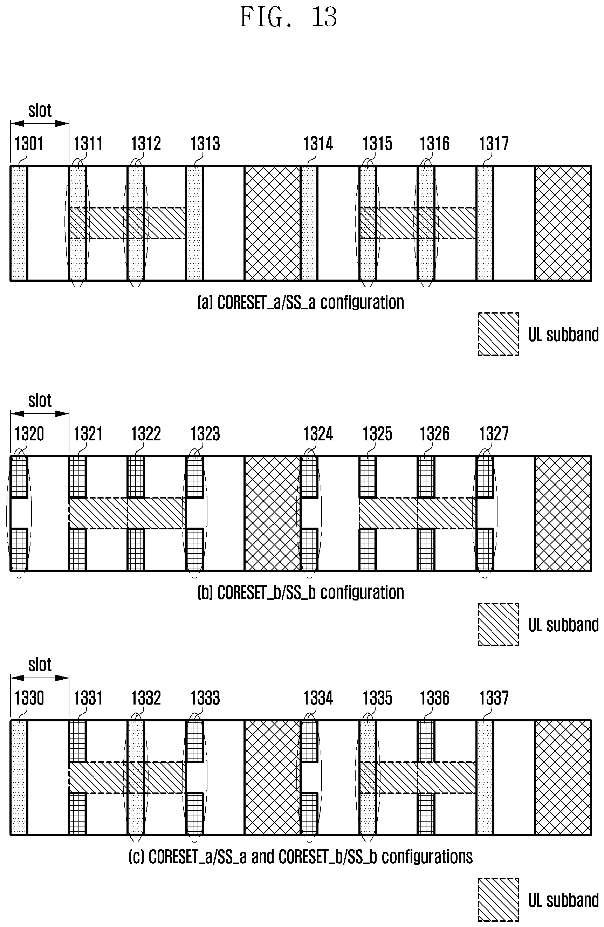

FIG. 13 is a diagram illustrating a PDCCH MO according to an existing configuration. As described in FIG. 12, it may be assumed that a TDD configuration and an SBFD UL subband configuration are configured for one UE. This is for convenience of description and the disclosure is not limited thereto.

Referring to case (a) of FIG. 13, a base station may configure CORESET_a/SS_a for a UE. Here, SS_a may indicate a period of 1 slot in order to monitor a PDCCH in each slot. Therefore, the UE may monitor a PDCCH according to a CORESET_a/SS_a configuration in each slot. For reference, since downlink reception is impossible in a UL slot, the PDCCH according to the CORESET_a/SS_a configuration is not monitored. In 8 slots other than a UL slot among 10 slots illustrated in case (a) of FIG. 13, MO#0 1310, MO#1 1311, MO#2 1312, MO#3 1313, MO#4 1314, MO#5 1315, MO#6 1316, and MO#7 1317 may be configured as PDCCH monitoring occasions (MOs) according to the CORESET_a/SS_a configuration. Further, at least one of RBs in a CORESET according to a CORESET_a configuration may overlap an RB configured in an SBFD UL subband. Therefore, some of the PDCCH MOs may overlap the SBFD UL subband. For example, MO#1 1311, MO#2 1312, MO#5 1315, and MO#6 1316 may overlap the SBFD UL subband. In this case, it is necessary to determine how to receive a PDCCH in the PDCCH MOs overlapping the SBFD UL subband among the PDCCH MOs according to the CORESET_a/SS_a configuration.

Referring to case (b) of FIG. 13, the base station may configure CORESET_b/SS_b for the UE. Here, SS_b may indicate a period of 1 slot in order to monitor a PDCCH in each slot. Therefore, the UE may monitor a PDCCH according to a CORESET_b/SS_b configuration in each slot. For reference, since downlink reception is impossible in a UL slot, the PDCCH according to the CORESET_b/SS_b configuration is not monitored. In 8 slots other than a UL slot among 10 slots illustrated in case (b) of FIG. 13, MO#0 1320, MO#1 1321, MO#2 1322, MO#3 1323, MO#4 1324, MO#5 1325, MO#6 1326, and MO#7 1327 may be configured as PDCCH monitoring occasions (MOs) according to the CORESET_b/SS_b configuration. Further, RBs in a CORESET according to a CORESET_b configuration may not overlap an RB configured in an SBFD UL subband. Therefore, some of the PDCCH MOs may not overlap the SBFD UL subband. However, the base station may have RBs that cannot be used for a CORESET in some PDCCH MOs. For example, MO#1 1320, MO#3 1323, MO#4 1324, and MO#7 1327 do not actually overlap the SBFD UL subband, but an RB allocated to the SBFD UL subband is not allocated to the CORESET in order not to overlap an RB allocated to the SBFD UL subband (in the frequency domain). In this case, there may be a lack of a frequency resource available for a CORESET.

Case (c) of FIG. 13 shows a case where two CORESET_a/SS_a configurations and CORESET_b/SS_b configurations are configured for the UE. Here, SS_a and SS_b may indicate a period of 2 slots in order to monitor a PDCCH every 2 slots. Further, in order to prevent a PDCCH of SS_a and a PDCCH of SS_b from being monitored in the same slot, an offset of SS_a and an offset of SS_b are assumed to have different values. For convenience, the offset of SS_a may be 0 and the offset of SS_b may be 1. The UE may monitor a PDCCH every 2 slots (MO#0 1330, MO#2 1332, MO#5 1335, and MO#7 1337) according to a CORESET_a/SS_a configuration, and may monitor a PDCCH every 2 slots (MO#1 1331, MO#3 1333, MO#4 1334, and MO#6 1336) according to a CORESET _b/SS_b configuration. However, although the CORESET_a/SS_a configuration and the CORESET_b/SS_b configuration have been configured for the UE, the problem described in cases (a) and (b) of FIG. 13 may still occur. For example, MO#2 1332 and MO#5 1335 overlap an SBFD UL subband, and MO#3 1333 and MO#4 1334 cannot use an RB of the SBFD UL subband for a CORESET. As such, the CORESET configuration and search space configuration described above cannot solve the problems of cases (a) and (b) of FIG. 13.

## Embodiment 1. Configuring a search space according to an SBFD operation

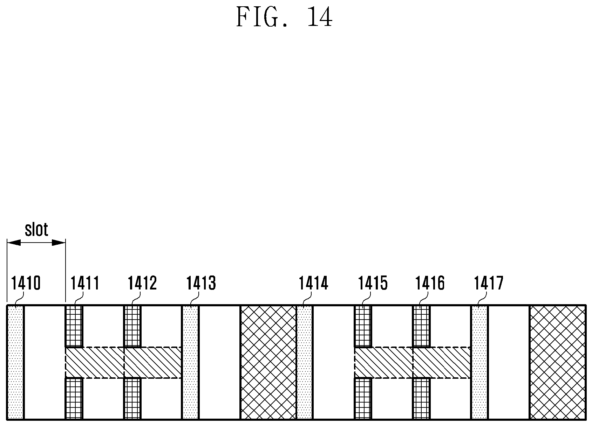

FIG. 14 is a diagram illustrating a PDCCH MO according to an embodiment of the disclosure.

Referring to FIG. 14, a UE may monitor a PDCCH in each slot, and each PDCCH MO may include the maximum possible number of RBs, considering an SBFD UL subband. For example, MO#0 1410, MO#3 1413, MO#4 1414, and MO#7 1417 located in a symbol where the SBFD UL subband is not configured follow RB allocation of CORESET_a, and MO#1 1411, MO#2 1412, MO#5 1415, and MO#6 1416 located in a symbol where the SBFD UL subband is configured follow RB allocation of CORESET_b. The following method may be used for such a configuration. Meanwhile, the disclosure is not limited to the following methods, and some of the following methods may be used in combination with each other.

## [Method 1] Configuring symbol information applying a search space

Method 1 of embodiment 1 is for a UE to selectively monitor only some PDCCH MOs among PDCCH MOs according to a configured search space.

The UE has monitored all the PDCCH MOs according to the configured search space. The problem described in cases (a) and (b) of FIG. 13 may occur for some of the PDCCH MOs. Therefore, the UE may not monitor some of the PDCCH MOs. Specifically, the following methods may be considered.

## [Method 1-1] Configuring a bitmap to apply an MO of a search space

A UE may receive a configuration of a bitmap regarding whether to monitor a PDCCH MO. The bitmap may be configured in a search space configuration. Each bit of the bitmap may be associated with a PDCCH MO. If a certain bit of the bitmap is "0", the UE may not monitor a PDCCH MO associated therewith. If a certain bit of the bitmap is "1", the UE may monitor a PDCCH MO associated therewith. Here, when monitoring the PDCCH MO, a CORESET is a CORESET associated with a search space. The associated CORESET may be determined as a "unique index of the associated CORESET" in the configuration of the search space.

For example, the bitmap may include P bits. Here, P may be the number of slots included in a TDD configuration period according to a TDD configuration. P may be the number of slots included in 10 ms. P may be the number of slots included in 20 ms. P may be the number of slots included in an SBFD UL subband period in which an SBFD UL subband is configured. A first bit of the P bits of the bitmap may be a first slot in the period. A p-th bit may be associated with a PDCCH MO of a p-th slot in the period. Here, the period may refer to a TDD configuration period, 10 ms, 20 ms, or an SBFD UL subband period.

For reference, in the number of slots, a slot may not be distinguished as a DL slot (a slot configured only with a DL symbol), a UL slot (a slot configured only with a UL symbol), or an S slot (a slot that is neither a DL slot nor a UL slot). In addition, in the number of slots, a slot may include only a DL slot (a slot configured only with a DL symbol) or an S slot.

For example, the bitmap may include P bits. Here, P may be the number of PDCCH MOs included in a TDD configuration period according to a TDD configuration. P may be the number of PDCCH MOs included in 10 ms. P may be the number of PDCCH MOs included in 20 ms. P may be the number of PDCCH MOs included in an SBFD UL subband period in which an SBFD UL subband is configured. A first bit of the P bits of the bitmap may be a first PDCCH MO in the period. A p-th bit may be associated with a p-th PDCCH MO in the period. Here, the period may refer to a TDD configuration period, 10 ms, 20 ms, or an SBFD UL subband period.

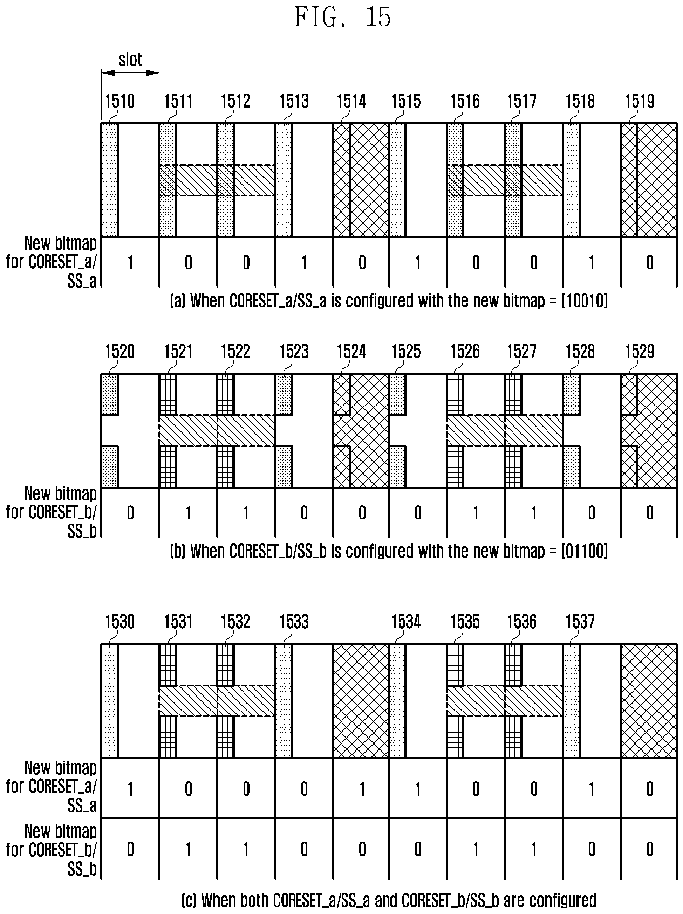

FIG. 15 is a diagram illustrating a bitmap-based PDCCH MO according to an embodiment of the disclosure.

For convenience of description, in case (a) of FIG. 15, it is assumed that CORESET_a and SS_a are configured for a UE. Here, SS_a is associated with CORESET_a. It is assumed that SS_a is configured to have a period of 1 slot to monitor a PDCCH in each slot. Referring to case (a) of FIG. 15, 10 PDCCH MOs (MO#0 1510, MO#1 1511, MO#2 1512, MO#3 1513, MO#4 1514, MO#5 1515, MO#6 1516, MO#7 1517, MO#8 1518, and MO#9 1519) may be configured. Here, for convenience, a PDCCH MO of a UL slot is also included, but the PDCCH MO may be excluded. There are 5 PDCCH MOs in one TDD period. Therefore, a P=5 bit bitmap may be configured in a search space. It is assumed that the bitmap is [1 0 0 1 0]. Here, a first bit may correspond to a first PDCCH MO (MO#0 1510 and MO#5 1515) in the TDD period. A second bit may correspond to a second PDCCH MO (MO#1 1511 and MO#6 1516) in the TDD period. A third bit may correspond to a third PDCCH MO (MO#2 1512 and MO#7 1517) in the TDD period. A fourth bit may correspond to a fourth PDCCH MO (MO#3 1513 and MO#8 1518) in the TDD period. A fifth bit may correspond to a fifth PDCCH MO (MO#4 1514 and MO#9 1519) in the TDD period. According to the bitmap [1 0 0 1 0], the UE may monitor the PDCCH MOs (MO#0 1510, MO#3 1513, MO#5 1515, and MO#8 1518) corresponding to the first bit and the fourth bit, and may not monitor the remaining PDCCH MOs. CORESET_a overlaps an SBFD UL subband in the frequency domain, but a PDCCH MO monitored by the UE according to the bitmap may not overlap the SBFD UL subband. Meanwhile, a value of the bitmap described in case (a) of FIG. 15 is merely provided as an example for convenience of description, and the disclosure is not limited thereto.

For convenience of description, in case (b) of FIG. 15, it is assumed that CORESET_b and SS_b are configured for the UE. Here, SS_b is associated with CORESET_b. It is assumed that SS_b is configured to have a period of 1 slot to monitor a PDCCH in each slot. Referring to case (b) of FIG. 15, 10 PDCCH MOs (MO#0 1520, MO#1 1521, MO#2 1522, MO#3 1523, MO#4 1524, MO#5 1525, MO#6 1526, MO#7 1527, MO#8 1528, and MO#9 1529) are configured. Here, for convenience, a PDCCH MO of a UL slot is also included, but the PDCCH MO may be excluded. There are 5 PDCCH MOs in one TDD period. Therefore, a P=5 bit bitmap may be configured in a search space. It is assumed that the bitmap is [0 1 1 0 0]. Here, a first bit may correspond to a first PDCCH MO (MO#0 1520 and MO#5 1525) in the TDD period. A second bit may correspond to a second PDCCH MO (MO#1 1521 and MO#6 1526) in the TDD period. A third bit may correspond to a third PDCCH MO (MO#2 1522 and MO#7 1527) in the TDD period. A fourth bit may correspond to a fourth PDCCH MO (MO#3 1523 and MO#8 1528) in the TDD period. A fifth bit may correspond to a fifth PDCCH MO (MO#4 1524 and MO#9 1529) in the TDD period. According to the bitmap [0 1 1 0 0], the UE may monitor the PDCCH MOs (MO#1 1521, MO#2 1522, MO#6 1526, and MO#7 1527) corresponding to the first bit and the fourth bit, and may not monitor the remaining PDCCH MOs. Since CORESET_b does not overlap an SBFD UL subband in the frequency domain, CORESET_b may be monitored only in a symbol where the SBFD UL subband is configured according to the bitmap. Meanwhile, a value of the bitmap described in case (a) of FIG. 15 is merely provided as an example for convenience of description, and the disclosure is not limited thereto.

For convenience of description, in case (c) of FIG. 15, it is assumed that CORESET _a/SS_a and CORESET_b/SS_b are configured for the UE. As described in cases (a) and (b) of FIG. 15, SS_a may include bitmap [1 0 0 1 0], and SS_b may include bitmap [0 1 1 0 0]. In this case, the UE may monitor PDCCH MOs 1530, 1533, 1534, and 1537 monitored by the UE in case (a) of FIG. 15 according to a CORESET_a/SS_a configuration, and PDCCH MOs 1531, 1532, 1535, and 1536 monitored by the UE in case (b) of FIG. 15 according to a CORESET_b/SS_b configuration. It may be identified that a PDCCH MO monitored by the UE according to this method is the same as a PDCCH MO monitored by the UE in FIG. 14.

## [Method 1-2] Configuring a symbol type to apply a PDCCH MO of a search space

The previously described method 1-1 requires a bitmap. Therefore, additional overhead may occur. Hereinafter, a method capable of reducing the additional overhead is proposed.

According to method 1-2, when configuring a search space for a UE, it is possible to indicate a symbol type capable of monitoring a PDCCH MO of the search space. The UE may monitor the PDCCH MO only in the indicated symbol type, and may not monitor the PDCCH MO in the unindicated symbol type.

Here, the symbol type may be classified into an SBFD symbol and a non-SBFD symbol. The SBFD symbol is a symbol in which an SBFD UL subband is configured. The non-SBFD symbol may be a symbol in which an SBFD UL subband is not configured.

More specifically, CORESET_a/SS_a may be configured for the UE. As described above, a CORESET according to CORESET_a may overlap the SBFD UL subband in the frequency axis. Therefore, a base station may configure a PDCCH MO according to SS_a to be monitored only in the non-SBFD symbol for an SS_a configuration. In this case, the UE may determine a PDCCH MO according to the SS_a configuration. It may be identified whether the PDCCH MO overlaps the SBFD symbol or the non-SBFD symbol. If the PDCCH MO overlaps at least one SBFD symbol, the UE may not monitor the PDCCH MO. If the PDCCH MO overlaps the non-SBFD symbol, the UE may monitor the PDCCH MO.

In addition, CORESET _b/SS_b may be configured for the UE. As described above, a CORESET according to CORESET_b may not overlap the SBFD UL subband in the frequency axis. Therefore, the base station may configure the UE to monitor a PDCCH MO according to SS_b only in the SBFD symbol for an SS_b configuration. In this case, the UE may determine a PDCCH MO according to the SS_b configuration. It may be identified whether the PDCCH MO overlaps the SBFD symbol or the non-SBFD symbol. If the PDCCH MO overlaps at least one SBFD symbol, the UE may monitor the PDCCH MO. If the PDCCH MO overlaps the non-SBFD symbol, the UE may not monitor the PDCCH MO.

**[Method 2] One search space is mapped to Two CORESETs**

Method 2 of embodiment 1 is to map multiple CORESETs to one search space. In consideration of an SBFD UL subband configuration, one of the multiple CORESETs is used for a PDCCH MO.

More specifically, one CORESET may be associated with a search space. One CORESET may be determined as a "unique index of the associated CORESET" in a configuration of the search space. Further, for all PDCCH MOs, RBs are determined according to a configuration of the associated CORESET. In this method, two CORESETs may be associated with the search space. Here, the configuration of the search space may include "unique indexes of the two associated CORESETs". For example, a unique index of a first associated CORESET may be a and a unique index of a second associated CORESET may be b. Therefore, a UE associates CORESET_a and CORESET_b with one search space.

The UE may select one of the two CORESET_a and CORESET_b for each PDCCH MO. This may follow one of the following methods. Meanwhile, the disclosure is not limited to the following methods, and some of the following methods may be used in combination with each other.

In method 2-a, the UE may exclude a CORESET that overlaps an SBFD UL subband from two CORESETs, CORESET_a and CORESET_b, in a PDCCH MO. That is, in a symbol where the SBFD UL subband exists, CORESET_a among the two CORESETs, CORESET_a and CORESET_b, may overlap the SBFD UL subband. Therefore, the UE may monitor a PDCCH by using the non-overlapping CORESET_b in the PDCCH MO. In a symbol where the SBFD UL subband does not exist, the UE may select one of CORESET_a and CORESET_b. Here, the selection may correspond to a CORESET having a lower CORESET index, a CORESET including more RBs, or a pre-designated CORESET. Here, the pre-designated CORESET may be specified in a search space configuration, or may be the unique index of the first associated CORESET in the search space configuration.

In method 2-b, the UE may receive a configuration of a bitmap indicating which of two CORESETs, CORESET_a and CORESET_b, to use in a PDCCH MO. The bitmap may be configured in a search space configuration. Each bit of the bitmap may be associated with the PDCCH MO. That is, if a certain bit of the bitmap is "0", a PDCCH MO associated therewith may use CORESET_a. In addition, if a certain bit of the bitmap is "1", a PDCCH MO associated therewith may use CORESET_b.

For example, the bitmap may include P bits. Here, P may be the number of slots included in a TDD configuration period according to a TDD configuration. P may be the number of slots included in 10 ms. P may be the number of slots included in 20 ms. P may be the number of slots included in an SBFD UL subband period in which an SBFD UL subband is configured. A first bit of the P bits of the bitmap may be a first slot in the period. A p-th bit may be associated with a PDCCH MO of a p-th slot in the period. Here, the period may refer to a TDD configuration period, 10 ms, 20 ms, or an SBFD UL subband period.

For reference, in the number of slots, a slot may not be distinguished as a DL slot (a slot configured only with a DL symbol), a UL slot (a slot configured only with a UL symbol), or an S slot (a slot that is neither a DL slot nor a UL slot). In addition, in the number of slots, a slot may include only a DL slot (a slot configured only with a DL symbol) or an S slot.

For example, the bitmap may include P bits. Here, P may be the number of PDCCH MOs included in a TDD configuration period according to a TDD configuration. P may be the number of PDCCH MOs included in 10 ms. P may be the number of PDCCH MOs included in 20 ms. P may be the number of PDCCH MOs included in an SBFD UL subband period in which an SBFD UL subband is configured. A first bit of the P bits of the bitmap may be a first PDCCH MO in the period. A p-th bit may be associated with a p-th PDCCH MO in the period. Here, the period may refer to a TDD configuration period, 10 ms, 20 ms, or an SBFD UL subband period.

**[Method 3] One search space is mapped to One CORESET with frequency domain information**

Method 3 of embodiment 1 is to map one CORESET to one search space and additionally configure information on a frequency to be monitored by a UE in the CORESET. Further, method 3 is to use information on a frequency to be monitored in a PDCCH MO, taking into account an SBFD UL subband configuration.

More specifically, one CORESET may be associated with a search space. One CORESET may be determined as a "unique index of the associated CORESET" in a configuration of the search space. Further, the information on the frequency to be monitored by the UE may be added to the search space or the associated CORESET.

For example, it is assumed that the CORESET is configured to occupy N RBs. The N RBs may be grouped into K sets. The information on the frequency to be monitored by the UE may indicate at least one of the K sets. The information on the frequency to be monitored may be included in a ceil(log2(K)) bit, and the UE may convert the bit into a decimal number and receive an indication of a first set among the K sets if the number is 0, and an indication of a second set among the K sets if the number is 1.

For example, it is assumed that the CORESET is configured to occupy N RBs. The N RBs may be grouped into K sets. The information on the frequency to be monitored by the UE may include a K-bit bitmap. Bits of the K-bit bitmap may correspond to the K sets, respectively. Here, a first bit corresponds to a first set, and a second bit corresponds to a second set. The UE may assume that if a k-th bit of the K-bit bitmap is "0", an RB of a corresponding k-th set is not indicated, and if the k-th bit of the K-bit bitmap is "1", the RB of the corresponding k-th set is indicated.

The N RBs may be grouped into K sets as follows. Assuming K=2, RBs that overlap a frequency band of a UL subband may be grouped into a first set, and RBs that do not overlap the frequency band of the UL subband may be grouped into a second set.

The N RBs may be grouped into K sets as follows. Assuming K=2, RBs that overlap a frequency band of a UL subband may be grouped into a first set, and RBs that do not overlap the frequency band of the UL subband may be grouped into a second set.

The N RBs may be grouped into K sets as follows. Assuming K=3, RBs that overlap a frequency band of a UL subband may be grouped into a first set, and among RBs that do not overlap the frequency band of the UL subband, RBs that are below the UL subband in the frequency axis may be grouped into a second set, and RBs that are above the UL subband in the frequency axis may be grouped into a third set.

The UE may monitor a PDCCH in RBs indicated in the information on the frequency to be monitored. That is, the UE has configured the CORESET to include N RBs, but RBs that are actually monitored may be determined by the information on the frequency to be monitored. Earlier, in method 2, two CORESETs are associated with one search space, but in method 3, one CORESET is associated and the entire RBs or only some RBs of the CORESET may be used for PDCCH monitoring.

Additionally, the UE may receive a configuration of information on multiple frequencies to be monitored in one search space, and may receive a configuration of an additional configuration to apply one piece information among the information on the multiple frequencies to be monitored to a PDCCH MO determined as the search space. This may be achieved by using method 2-a or method 2-b as described earlier. More specifically, it is as follows. Meanwhile, the disclosure is not limited to the following methods, and some of the following methods may be used in combination with each other.

In method 3-a, the UE may receive a configuration of information on two frequencies to be monitored in a search space. For example, information on a first frequency to be monitored may include RBs that do not overlap an SBFD UL subband. Information on a second frequency to be monitored may include all RBs included in a CORESET. For reference, the information on the second frequency to be monitored that includes all the RBs included in the CORESET may not be separately configured in the search space. However, for the description of the disclosure, it is assumed that the second frequency to be monitored is configured to include all the RBs in the CORESET. If all RBs according to the information on the second frequency to be monitored in a PDCCH MO determined by a search space configuration can be received (i.e., do not overlap the SBFD UL subband), the UE may receive a PDCCH by using the RBs according to the information on the second frequency to be monitored in the PDCCH MO. If the RBs according to the information on the second frequency to be monitored in the PDCCH MO determined by the search space configuration cannot be received (i.e., overlap the SBFD UL subband), the UE cannot receive a PDCCH by using the RBs according to the information on the second frequency to be monitored in the PDCCH MO. In this case, if RBs according to the information on the first frequency to be monitored in the PDCCH MO determined by the search space configuration can be received (i.e., do not overlap the SBFD UL subband), the UE may receive a PDCCH by using the RBs according to the information on the first frequency to be monitored in the PDCCH MO.

In method 3-b, the UE may receive a configuration of information on two frequencies to be monitored in a search space. The UE may receive a configuration of a bitmap indicating which information to use among the information on the two frequencies to be monitored. The bitmap may be configured in a search space configuration. Each bit of the bitmap may be associated with a PDCCH MO. That is, if a certain bit of the bitmap is "0", a PDCCH MO associated therewith may use information on a first frequency to be monitored. In addition, if a certain bit of the bitmap is "1", a PDCCH MO associated therewith may use information on a second frequency to be monitored.

A length or period of the bitmap may follow the previous method 2-b.

## Embodiment 2. Operation of a UE when a PDCCH MO of a search space overlaps an SBFD UL subband

In the previous embodiment, a method in which a base station newly configures a PDCCH MO according to a UL subband configuration is described. Hereinafter, a PDCCH MO is determined according to the existing method and an operation of a UE in a case where a PDCCH MO and a UL subband collide will be described.

**[Method 1] Not monitoring all PDCCH candidates of a PDCCH MO overlapping an SBFD UL subband**

In method 1 of embodiment 2, if at least one RB of a determined PDCCH MO overlaps a UL subband, a UE does not monitor the PDCCH MO. Not monitoring the PDCCH MO may mean that, although PDCCH candidates are configured within the PDCCH MO, the PDCCH MO is not monitored. Here, the PDCCH candidates may also include PDCCH candidates that do not overlap the UL subband.

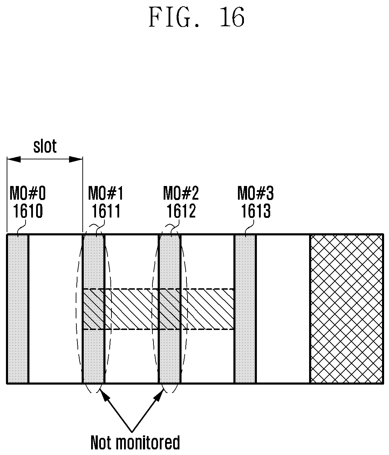

FIG. 16 is a diagram illustrating a case of not monitoring all PDCCH candidates of a PDCCH MO according to an embodiment of the disclosure.

In FIG. 16, a UE may receive a configuration of a CORESET and a search space. For convenience, it is assumed that CORESET_a and SS_a are configured. SS_a and CORESET_a are associated with each other. The UE may determine symbols corresponding to a PDCCH MO according to a configuration of SS_a. Further, the UE may determine RBs according to a configuration of CORESET_a in the PDCCH MO. The UE may identify whether an RB determined according to the configuration of CORESET_a overlaps a UL subband in a symbol corresponding to the PDCCH MO. If the RB does not overlap the UL subband, the UE may monitor the PDCCH MO. Alternatively, if the RB overlaps the UL subband, the UE may not monitor the PDCCH MO. Referring to FIG. 16, the UE may identify whether the RB determined according to the configuration of CORESET_a overlaps the UL subband in symbols corresponding to PDCCH MOs 1610, 1611, 1612, and 1613, and may monitor the PDCCH MOs 1610 and 1613 that do not overlap the UL subband. Alternatively, the UE may not monitor the PDCCH MOs 1611 and 1612 that overlap the UL subband.

**[Method 2] Not monitoring a PDCCH candidate overlapping an SBFD UL subband**

In method 2 of embodiment 2, a UE may identify whether each PDCCH candidate of a determined PDCCH MO overlaps an SBFD UL subband, and if they overlap, the UE may not monitor the PDCCH candidate.

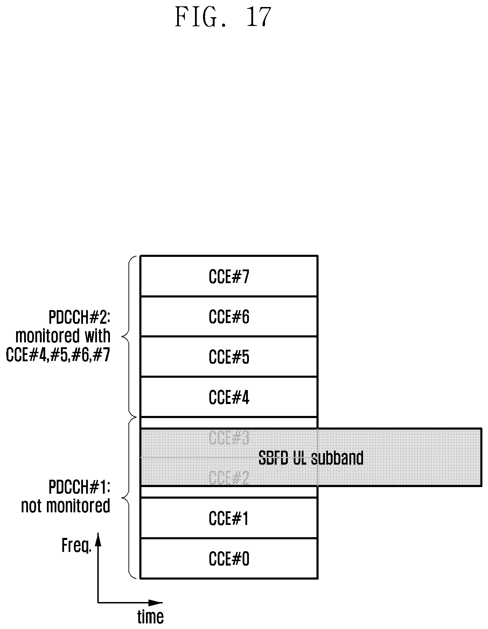

FIG. 17 is a diagram illustrating a case of not monitoring a PDCCH candidate according to an embodiment of the disclosure.

In FIG. 17, a UE may receive a configuration of a CORESET and a search space. For convenience, it is assumed that CORESET_a and SS_a are configured. SS_a and CORESET_a are associated with each other. The UE may determine symbols corresponding to a PDCCH MO according to a configuration of SS_a. Further, the UE may determine a PDCCH candidate according to configurations of CORESET_a and SS_a. For example, it is assumed that CORESET_a includes 8 control channel elements (CCEs) and monitors two PDCCH candidates having an aggregation level (AL) of 4 according to the configuration of SS_a. Here, among the two PDCCH candidates monitored by the UE, PDCCH#1 blindly decodes a PDCCH in CCE#0, CCE#1, CCE#2, and CCE#3, and PDCCH#2 blindly decodes a PDCCH in CCE#4, CCE#5, CCE#6, and CCE#7. The UE may identify whether each of the two PDCCH candidates overlaps a UL subband. Referring to FIG. 17, some CCE#2 and CCE#3 of the four CCEs of PDCCH#1 may overlap an SBFD UL subband. According to this method, the UE may not monitor PDCCH#1. However, since all of the four CCEs of PDCCH#2 do not overlap the SBFD UL subband, the UE may monitor PDCCH#2.

According to method 2, even when some PDCCH candidates of a PDCCH MO overlap the SBFD UL subband, the UE may monitor a PDCCH candidate that does not overlap the SBFD UL subband.

**[Method 3] Not monitoring a CCE overlapping an SBFD UL subband**

In method 3 of embodiment 2, a UE may identify whether each of PDCCH candidates of a determined PDCCH MO overlaps an SBFD UL subband, and if they overlap, the UE may monitor a PDCCH candidate by using non-overlapping CCEs excluding the CCE. That is, among CCEs of a PDCCH candidate, CCEs that overlap the SBFD UL subband may be excluded.

For reference, if all the CCEs of the PDCCH candidate overlap the SBFD UL subband, the PDCCH candidate may not be monitored. In addition, if a certain number or more of CCEs of the PDCCH candidate overlap the SBFD UL subband, the PDCCH candidate may not be monitored. The certain number may be equal to half of the CCEs included in the PDCCH candidate. That is, if more than half of the CCEs overlap the SBFD UL subband, the PDCCH candidate may not be monitored.

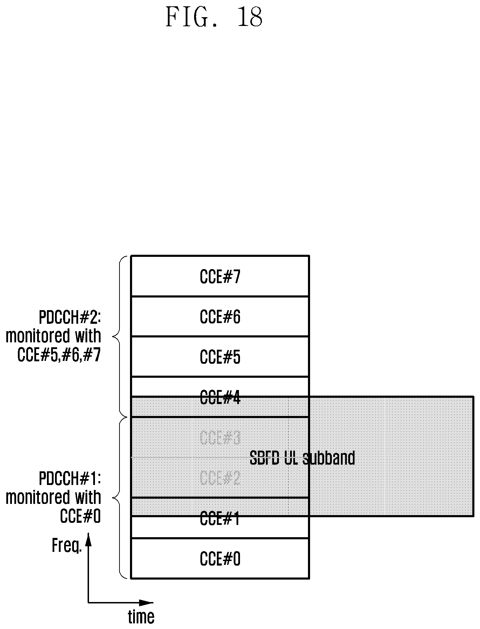

FIG. 18 is a diagram illustrating a case of not monitoring some CCEs of a PDCCH candidate according to an embodiment of the disclosure.

In FIG. 18, a UE may receive a configuration of a CORESET and a search space. For convenience, it is assumed that CORESET_a and SS_a are configured. SS_a and CORESET_a are associated with each other. The UE may determine symbols corresponding to a PDCCH MO according to a configuration of SS_a. Further, the UE may determine a PDCCH candidate according to configurations of CORESET_a and SS_a. For example, it is assumed that CORESET_a includes 8 control channel elements (CCEs) and monitors two PDCCH candidates having an aggregation level (AL) of 4 according to the configuration of SS_a. Here, among the two PDCCH candidates monitored by the UE, PDCCH#1 blindly decodes a PDCCH in CCE#0, CCE#1, CCE#2, and CCE#3, and PDCCH#2 blindly decodes a PDCCH in CCE#4, CCE#5, CCE#6, and CCE#7. The UE may identify whether a CCE of each PDCCH candidate overlaps a UL subband. Referring to FIG. 18, among the four CCEs of PDCCH#1, CCE#1, CCE#2, and CCE#3 overlap an SBFD UL subband, but CCE#0 does not overlap the SBFD UL subband. Therefore, PDCCH#1 may be blindly decoded in the non-overlapping CCE#0. Among the four CCEs of PDCCH#2, CCE#4 overlaps the SBFD UL subband, but CCE#5, CCE#6, and CCE#7 do not overlap the SBFD UL subband. Therefore, PDCCH#2 may be blindly decoded in the non-overlapping CCE#5, CCE#6, and CCE#7.

The UE may assume that a DCI format is rate-matched or punctured in CCEs used for PDCCH reception in consideration of the UL subband, and receive the DCI format through the CCEs. When rate matching is assumed, the UE may determine coded bits of the DCI format, which are coded with a polar code transmitted, based on the number of REs included in the CCEs used for PDCCH reception. In addition, the coded bits may be received assuming that they are consecutively transmitted in the REs included in the CCEs. When puncturing is assumed, the UE may determine coded bits of the DCI format, which are coded with a polar code transmitted, based on the number of REs included in the CCEs configured to be used for PDCCH reception without considering the UL subband. In addition, it is assumed that the coded bits are consecutively transmitted to the REs included in the CCEs. Further, the UE may receive some of the coded bits in the CCEs used for PDCCH reception in consideration of the UL subband. That is, the UE cannot receive coded bits mapped to REs included in a CCE that overlaps the UL subband among the coded bits.

According to method 3, even when a part of at least one CCE of a PDCCH candidate overlaps the SBFD UL subband, the UE may monitor the PDCCH candidate by using a CCE that does not overlap the SBFD UL subband.

## [Method 4] Determining a PDCCH candidate by excluding a CCE overlapping an SBFD UL subband

In method 4 of embodiment 2, a UE may identify whether CCEs of a determined PDCCH MO overlap an SBFD UL subband, and may newly determine an index of a non-overlapping CCE by excluding an overlapping CCE. Further, the PDCCH candidate may be determined based on the newly determined index of the CCE.

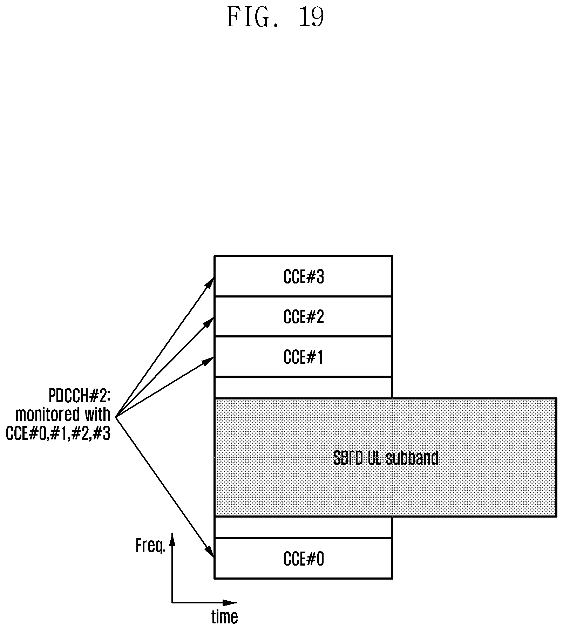

FIG. 19 is a diagram illustrating a case of determining an index of a CCE, based on an SBFD configuration, and monitoring a PDCCH candidate according to an embodiment of the disclosure.

In FIG. 19, a UE may receive a configuration of a CORESET and a search space. For convenience, it is assumed that CORESET_a and SS_a are configured. SS_a and CORESET_a are associated with each other. The UE may determine symbols corresponding to a PDCCH MO according to a configuration of SS_a. Further, the UE may identify RBs occupied by a CORESET according to a configuration of CORESET_a, and may group the RBs to generate a CCE. For example, it is assumed that CORESET_a includes 8 control channel elements (CCEs). Some CCEs among the 8 CCEs may overlap an SBFD UL subband. The CCEs are included according to a CORESET configuration, but the UE may exclude the CCEs. Further, the UE may newly assign indexes to CCEs that do not overlap the SBFD UL subband. Referring to FIG. 19, four CCEs may not overlap the SBFD UL subband, and the four CCEs may be determined to have indexes of CCE#0, CCE#1, CCE#2, and CCE#3, respectively. The UE may identify the number of CCEs ($N_{CCE}$) included in the CORESET in the PDCCH MO as the number of CCEs that do not overlap the SBFD UL subband, that is, 4. The UE may determine a PDCCH candidate, based on $N_{CCE}$ and the indexes of the CCEs that do not overlap the SBFD UL subband, through the following Table 16. In the equation below, $N_{CCE,p}=N_{CCE}$.

[Table 16]

For a search space set s associated with CORESET p, the CCE indexes for aggregation level L corresponding to PDCCH candidate $M_{s,n_{CI}}^{(L)}$ of the search space set in slot $n_{s,f}^{\mu}$ for an active DL BWP of a serving cell corresponding to carrier indicator field value $n_{CI}$ are given by

$$L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) mod \left\lfloor \frac{N_{CCE,p}}{L} \right\rfloor \right\} + i$$

where

for any CSS, $Y_{p,n_{s,f}^{\mu}}=0$ ;

for a USS, $Y_{p,n_{s,f}^{\mu}}=(A_p \cdot Y_{p,n_{s,f}^{\mu}-1}) mod D$ , $Y_{p,-1}=n_{RNTI}\neq0$, $A_p$ = 39827 for p mod 3 = 0 , $A_p$ = 39829 for p mod 3 = 1 , $A_p$ = 39839 for p mod 3 = 2, D= 65537;

i = 0, ... , L -1;

$N_{CCE,p}$ is the number of CCEs, not overlapping with SBFD UL subband, if configured, numbered from 0 to $N_{CCE,p}-1$, in CORESET p;

$n_{CI}$ is the carrier indicator field value if the UE is configured with a carrier indicator field by *CrossCarrierScheduling-Config* for the serving cell on which PDCCH is monitored; otherwise, including for any CSS, $n_{CI}=0$;

$m_{s,n_{CI}}= 0, …, M^{(L)}_{s,n_{CI}}-1$ , where $M^{(L)}_{s,n_{CI}}$ is the number of PDCCH candidates the UE is configured to monitor for aggregation level L of a search space set s for a serving cell corresponding to $n_{CI}$;

for any CSS, $M^{(L)}_{s,\max}=M^{(L)}_{s,0}$ ;

for a USS, $M^{(L)}_{s,\max}$ is the maximum of $M^{(L)}_{s,n_{CI}}$ over all configured $n_{CI}$ values for a CCE aggregation level L of search space set s ;

the RNTI value used for $n_{RNTI}$ is the C-RNTI.

For example, a PDCCH candidate having an aggregation level of 4 may obtain CCE indexes of 0, 1, 2, and 3 according to the above equation. That is, a PDCCH candidate having an aggregation level of 4 may be monitored in CCE#0, CCE#1, CCE#2, and CCE#3, and the CCE#0, CCE#1, CCE#2, and CCE#3 are CCEs that do not overlap the SBFD UL subband in FIG. 19. When a CCE that overlaps the SBFD UL subband is excluded, the number of CCEs included in the PDCCH candidate may be reduced, and thus, the coverage of the PDCCH candidate may be reduced. Meanwhile, according to method 4, even when the CCE that overlaps the SBFD UL subband is excluded, a coverage reduction problem can be prevented by determining a new PDCCH candidate based on the CCEs that do not overlap the SBFD UL subband.

**[Method 5] Not monitoring an REG bundle overlapping an SBFD UL subband**

In method 5 of embodiment 2, a UE may exclude an REG bundle overlapping an SBFD UL subband in a determined PDCCH MO from a CCE. A CCE from which a partial REG bundle is excluded may be referred to as a partial CCE (pCCE). The UE may monitor a PDCCH candidate by using the pCCE.

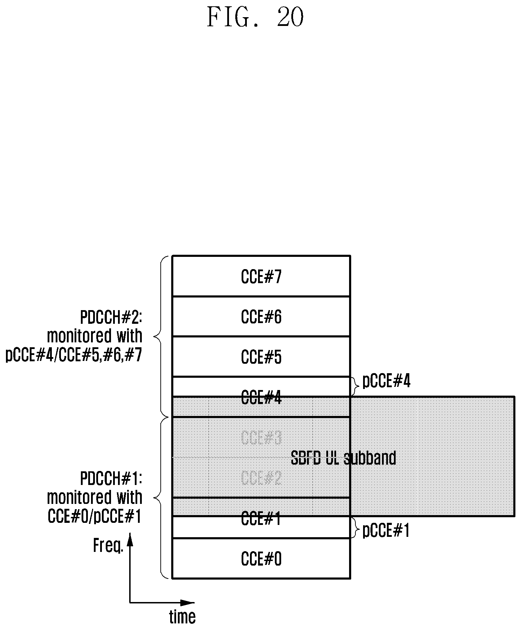

FIG. 20 is a diagram illustrating a case of monitoring an REG bundle or an REG of a PDCCH candidate according to an embodiment of the disclosure.

In FIG. 20, a UE may receive a configuration of a CORESET and a search space. For convenience, it is assumed that CORESET_a and SS_a are configured. SS_a and CORESET_a are associated with each other. The UE may determine symbols corresponding to a PDCCH MO according to a configuration of SS_a. Further, the UE may identify REGs included in the CORESET according to a configuration of CORESET_a, and may group the REGs to generate REG bundles, and group the RBG bundles to generate a CCE. For example, it is assumed that CORESET_a includes 48 REGs. (Here, CORESET_a may include 48 RBs and 1 symbol on the frequency axis.) The UE may group 2 REGs to generate an REG bundle. Further, the UE may group 3 REG bundles to generate one CCE. The UE may identify whether each REG bundle included in the CCE overlaps an SBFD UL subband. If an REG bundle overlaps the SBFD UL subband, the REG bundle may be excluded from the CCE. Only an REG bundle that does not overlap the SBFD UL subband may be included in the CCE. Further, a CCE that does not include all REG bundles may be referred to as pCCE. Referring to FIG. 20, some REG bundles of CCE#1 and CCE#4 may overlap the SBFD UL subband. Therefore, pCCE#1 to pCCE#4 may be generated by using only the remaining REG bundles, excluding an REG bundle that overlaps the SBFD UL subband.

The UE may identify a CCE and pCCE to monitor a PDCCH candidate. For example, it is assumed that the UE monitors PDCCH candidate 1 in CCE#0, CCE#1, CCE#2, and CCE#3. Here, CCE#1 may be replaced with pCCE#1 since some REG bundles overlap the SBFD UL subband. Alternatively, for example, it is assumed that the UE monitors PDCCH candidate 2 in CCE#4, CCE#5, CCE#6, and CCE#7. Here, CCE#4 may be replaced with pCCE#4 since some REG bundles overlap the SBFD UL subband. Meanwhile, if all REG bundles included in a CCE overlap the SBFD UL subband, the CCE may not be used for the PDCCH candidate. This may follow the previous method 3 or method 4.

The UE may assume that a DCI format is rate-matched or punctured in REG bundles used for PDCCH reception in consideration of a UL subband, and receive the DCI format through the REG bundles. When rate matching is assumed, the UE may determine coded bits of the DCI format, which are coded with a polar code transmitted, based on the number of REs included in the REG bundles used for PDCCH reception. In addition, the coded bits may be received assuming that they are consecutively transmitted in the REs included in the REG bundles. When puncturing is assumed, the UE may determine coded bits of the DCI format, which are coded with a polar code transmitted, based on the number of REs included in the REG bundles configured to be used for PDCCH reception without considering the UL subband. In addition, it is assumed that the coded bits are consecutively transmitted to the REs included in the REG bundles. Further, the UE may receive some of the coded bits in the REG bundles used for PDCCH reception in consideration of the UL subband. That is, the UE cannot receive coded bits mapped to REs included in an REG bundle that overlaps the UL subband among the coded bits.

According to method 5, even when some of multiple REG bundles constituting a CCE overlap the SBFD UL subband, REG bundles that do not overlap the SBFD UL subband may be used for PDCCH monitoring.

**[Method 6] Generating a CCE by excluding an REG bundle overlapping an SBFD UL subband**

In method 6 of embodiment 2, a UE may generate a CCE by excluding an REG bundle overlapping an SBFD UL subband in a determined PDCCH MO.

More specifically, the UE may receive a configuration of a CORESET and a search space. For convenience, it is assumed that CORESET_a and SS_a are configured. SS_a and CORESET_a are associated with each other. The UE may determine symbols corresponding to a PDCCH MO according to a configuration of SS_a. CORESET configuration information may additionally include the following information.

- REG bundle size, L
- Whether it is interleaved CCE-to-REG mapping or non-interleaved CCE-to-REG mapping
- When it is interleaved CCE-to-REG mapping, interleaving size, R

The UE may identify REGs included in a CORESET according to a configuration of CORESET _a. According to an REG bundle size, the REGs may be grouped to generate an REG bundle. Here, among REG bundles, an REG bundle that does not overlap the SBFD UL subband may be assigned an index. For convenience, it is assumed that the REG bundle that does not overlap the SBFD UL subband among the REG bundles is a valid REG bundle. A valid REG bundle located at the lowest frequency has an index of 0, and indexes may increase in ascending order in the frequency domain. A CCE may be generated by grouping valid REG bundles. CCE#j includes REG bundle {f(6*j/L), f(6*j/L+1), ..., f(6*j/L+6/L-1)}, wherein if f(x) is non-interleaved CCE-to-REG mapping, f(x)=x, and if it is interleaved CCE-to-REG mapping, the following equation may be followed. Here, $N_{REG}^{CORESET}$ is the number of REGs included in a valid REG bundle included in a CORESET. Further, the UE expects $N_{REG}^{CORESET}/(LR)$ to be an integer. When it is interleaved CCE-to-REG mapping, R is an interleaving size and L is an REG bundle size.

$$f(x) = (rC + c + n_{shift}) \, mod(N_{REG}^{CORESET}/L)$$

$$x = cR + r$$

$$c = 0,1, \dots, R - 1$$

$$C = N_{REG}^{CORESET}/(LR)$$

If some of REG bundles included in one CCE overlap the SBFD UL subband, and the corresponding CCE includes only an REG bundle that does not overlap the SBFD UL subband, fewer REG bundles compared to the existing CCE are included. This may result in a reduction in the coverage of a PDCCH. Meanwhile, according to method 6, since a new CCE is determined based on the REG bundle that does not overlap the SBFD UL subband, a coverage reduction problem can be prevented.

**[Method 7] Not monitoring an REG overlapping an SBFD UL subband**

In method 7 of embodiment 2, a UE may exclude an REG overlapping an SBFD UL subband in a determined PDCCH MO from PDCCH reception. That is, REGs overlapping the SBFD UL subband may be grouped into an REG bundle, and REG bundles may be grouped into a CCE, but when a PDCCH is received, the REGs may be excluded.

More specifically, the UE may receive a configuration of a CORESET and a search space. For convenience, it is assumed that CORESET_a and SS_a are configured. SS_a and CORESET_a are associated with each other. The UE may determine symbols corresponding to a PDCCH MO according to a configuration of SS_a. Further, the UE may identify REGs included in the CORESET according to a configuration of CORESET _a, and may group the REGs to generate REG bundles, and group the RBG bundles to generate a CCE. For example, it is assumed that CORESET_a includes 48 REGs. (Here, CORESET_a may include 48 RBs and 1 symbol on the frequency axis.) The UE may group 2 REGs to generate an REG bundle. Further, the UE may group 3 REG bundles to generate one CCE. One PDCCH candidate may be monitored in one or multiple CCEs. The UE may identify whether each REG included in a PDCCH candidate overlaps the SBFD UL subband. If an REG overlaps the SBFD UL subband, the REG may be excluded from a CCE (or REG bundle) in which the PDCCH candidate is monitored. Only an REG that does not overlap the SBFD UL subband may be included in the CCE (or REG bundle) in which the PDCCH candidate is monitored.

The UE may assume that a DCI format is rate-matched or punctured in REGs used for PDCCH reception in consideration of a UL subband, and receive the DCI format through the REGs. When rate matching is assumed, the UE may determine coded bits of the DCI format, which are coded with a polar code transmitted, based on the number of REs included in the REGs used for PDCCH reception. In addition, the coded bits may be received assuming that they are consecutively transmitted in the REs included in the REGs. When puncturing is assumed, the UE may determine coded bits of the DCI format, which are coded with a polar code transmitted, based on the number of REs included in the REGs configured to be used for PDCCH reception without considering the UL subband. In addition, it is assumed that the coded bits are consecutively transmitted to the REs included in the REGs. Further, the UE may receive some of the coded bits in the REGs used for PDCCH reception in consideration of the UL subband. That is, the UE cannot receive coded bits mapped to REs included in an REG that overlaps the UL subband among the coded bits.

According to method 7, even when the SBFD UL subband and the REG bundle overlap each other, a valid REG that does not overlap the SBFD UL subband among REG bundles may be used for PDCCH monitoring.

**[Method 8] Generating an REG bundle by excluding an REG overlapping an SBFD UL subband**

In method 8 of embodiment 2, a UE may generate an REG bundle by excluding an REG overlapping an SBFD UL subband in a determined PDCCH MO.

More specifically, the UE may receive a configuration of a CORESET and a search space. For convenience, it is assumed that CORESET_a and SS_a are configured. SS_a and CORESET_a are associated with each other. The UE may determine symbols corresponding to a PDCCH MO according to a configuration of SS_a. The UE may identify REGs included in a CORESET according to a configuration of CORESET_a. The UE may exclude REGs that overlap the SBFD UL subband among the REGs. The UE may assign indexes to REGs that do not overlap the SBFD UL subband among the REGs. For reference, for convenience, it is assumed that an REG that does not overlap the SBFD UL subband among the REGs is a valid REG. Indexes of the REGs are assigned first in ascending order of time in the same frequency band, and then the indexes may be assigned in ascending order of frequency bands. An REG bundle may be determined by using an index of the valid REG. REG bundle i may include REG {i*L, i*L+1, ..., i*L+L-1}. When grouping REG bundles into a CCE, $N_{REG}^{CORESET}$ refers to the number of REGs included in an REG bundle included in a CORESET, and the REG bundle represents an REG bundle including valid REGs described above. If an REG that overlaps the SBFD UL subband among REGs of a CCE (or REG bundle) in which a PDCCH candidate is monitored is excluded, the number of REs in which the PDCCH candidate is monitored may be reduced, and the coverage of a PDCCH may be reduced. Meanwhile, if an REG bundle is generated by excluding an REG that overlaps the SBFD UL subband according to method 8, a coverage reduction problem can be prevented.

**[Method 9] Not monitoring an RB overlapping an SBFD UL subband and consecutive RBs when a wideband CORESET is configured**

Method 9 of embodiment 2 may be used when a wideband CORESET is configured for a UE. Whether a CORESET is a wideband CORESET or not may be included in a CORESET configuration. When the UE is configured to assume the same precoder in REGs belonging to consecutive RBs included in the CORESET, the CORESET may be referred to as a wideband CORESET. That is, the UE may use channel information estimated in one REG in another REG by assuming the same precoder in REGs belonging to the consecutive RBs included in the CORESET. In addition, a channel may be jointly estimated by using DMRSs of RBGs of the consecutive RBs in the CORESET. The CORESET may include multiple sets of consecutive RBs.

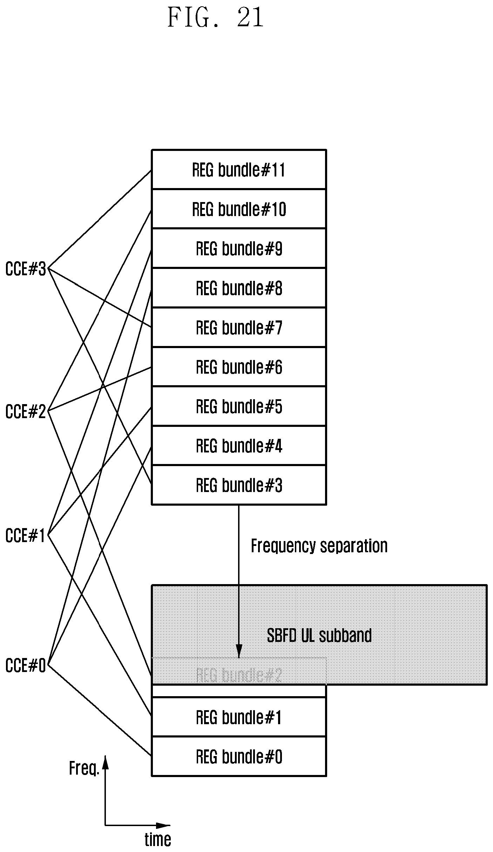

FIG. 21 is a diagram illustrating a case of monitoring a PDCCH candidate when configuring a wideband CORESET according to an embodiment of the disclosure.

Referring to FIG. 21, a CORESET may include multiple sets of consecutive RBs. For example, in FIG. 21, a CORESET may be configured with two sets of consecutive RBs, REGs of one set (a first set) may be grouped to generate REG bundle#0, REG bundle#1, and REG bundle#2, and REGs of another set (a second set) may be grouped to generate REG bundle#3, REG bundle#4, REG bundle#5, REG bundle#6, REG bundle#7, REG bundle#8, REG bundle#9, REG bundle#10, and REG bundle#11. When a wideband CORESET is configured, the UE may assume the same precoder for REG bundles (or REGs included in the REG bundles) of the first set, and may assume the same precoder for REG bundles (or REGs included in the REG bundles) of the second set. However, the UE cannot assume the same precoder for the REGs of the first set and the REGs of the second set. Although shown as an REG bundle in FIG. 21, it may be interpreted as being replaced with an REG.

In method 9 of embodiment 2, when at least one REG among REGs of one set overlaps an SBFD UL subband, all the REGs of the set may not be used to monitor a PDCCH candidate. In FIG. 21, REG bundle#2 may overlap the SBFD UL subband. REG bundle#0, REG bundle#1, and REG bundle#2 of the first set including REG bundle#2, and REGs included therein may not be used to monitor a PDCCH candidate. This is because some REGs of the first set overlap the SBFD UL subband, and thus the UE cannot perform joint channel estimation using the REGs of the set.

Meanwhile, the above-described methods 2 to 8 may be used. Although a UL subband actually overlaps some REGs (or REG bundles), the UE may use the above-described methods 2 to 8 by assuming that the UL subband overlaps all the REGs (or REG bundles) of the first set. For example, the UE may operate as follows.

Referring to method 2, if at least one REG (or REG bundle) among REGs (or REG bundles) included in a PDCCH candidate is included in the first set, the UE may not monitor the PDCCH candidate.

Referring to method 3, the UE may monitor a PDCCH candidate by excluding CCEs including the REG (or REG bundle) included in the first set among CCEs included in the PDCCH candidate.

Referring to method 4, if the UE may assign indexes to the remaining CCEs excluding CCEs including the REG (or REG bundle) included in the first set among CCEs determined according to a CORESET configuration, the UE may determine a PDCCH candidate based on the indexes.

Referring to method 5, the UE may monitor a PDCCH candidate by excluding REG bundles including the REG (or REG bundle) included in the first set among REG bundles included in the PDCCH candidate.

Referring to method 6, if the UE may assign indexes to the remaining REG bundles excluding REG bundles including the REG (or REG bundle) included in the first set among REG bundles determined according to a CORESET configuration, the UE may determine a PDCCH candidate based on the indexes.

Referring to method 7, the UE may monitor a PDCCH candidate by excluding REGs including the REG included in the first set among REGs included in the PDCCH candidate.

Referring to method 8, if the UE may assign indexes to the remaining REGs excluding REGs including the REG included in the first set among REGs determined according to a CORESET configuration, the UE may determine a PDCCH candidate based on the indexes.

Meanwhile, methods 1 to 9 may be used differently for each search space type. A search space type may be a common search space or a UE search space (USS). The common search space (CSS) may be subdivided as follows.

- a Type0-PDCCH CSS set configured by pdcch-ConfigSIB1 in MIB or by searchSpaceSIB1 in PDCCHConfigCommon or by searchSpaceZero in PDCCH-ConfigCommon for a DCI format with CRC scrambled by a SI-RNTI on the primary cell of the MCG
- a Type0A-PDCCH CSS set configured by searchSpaceOtherSystemInformation in PDCCH-ConfigCommon for a DCI format with CRC scrambled by a SI-RNTI on the primary cell of the MCG
- a Type1-PDCCH CSS set configured by ra-SearchSpace in PDCCH-ConfigCommon for a DCI format with CRC scrambled by a RA-RNTI or a TC-RNTI on the primary cell
- a Type2-PDCCH CSS set configured by pagingSearchSpace in PDCCH-ConfigCommon for a DCI format with CRC scrambled by a P-RNTI on the primary cell of the MCG
- a Type3-PDCCH CSS set configured by SearchSpace in PDCCH-Config with searchSpaceType = common for DCI formats with CRC scrambled by INT-RNTI, SFI-RNTI, TPC-PUSCH-RNTI, TPC-PUCCH-RNTI, or TPCSRS-RNTI and, only for the primary cell, C-RNTI, MCS-C-RNTI, or CS-RNTI(s)

A search space type may be included in a search space configuration. When a first search space type is configured in the search space configuration, the UE may select and apply methods 1 to 9 to a PDCCH MO determined according to the search space configuration. However, when a second search space type is configured in the search space configuration, the UE may perform the existing PDCCH candidate monitoring operation without applying methods 1 to 9. For example, the first search space type may be a USS, and the second search space type may be a CSS. For another example, the first search space type may be a USS and a Type 3-PDCCH CSS, and the second search space type may be the remaining CSS. For another example, the first search space type may include a USS, and the second search space type may include a Type0-PDCCH CSS.

In addition, methods 1 to 9 may be used differently depending on a DCI format monitored in a search space. The DCI format may be DCI formats 0_0, 0_1, 1_0, 1_1, 0_2, 1_2, and also DCI formats 2_0, 2_1, 2_2, .... The DCI format monitored may be configured in the search space configuration. When a first DCI format is configured, the UE may select and apply methods 1 to 9 to a PDCCH MO determined according to the search space configuration. However, when a second DCI format is configured in the search space configuration, the UE may perform the existing PDCCH candidate monitoring operation without applying methods 1 to 9. Here, the first DCI format may include DCI formats 1_0, 1_1, 0_2, 1_2, and DCI formats 2_0, 2_1, 2_2, etc., that may be used in a step after an RRC configuration, and the second DCI format may include DCI formats 0_0 and 0_1 that may be used in a random access step.

**[Base station operation limitation] A UE does not expect an MO of a configured search space to overlap an SBFD UL subband**

In the above description, a UE has handled a case where a CORESET overlaps an SBFD UL subband in a determined PDCCH MO. However, the UE may require additional UE complexity to identify whether the CORESET overlaps the SBFD UL subband. Therefore, there may be at least the following UE capability reporting and base station operation limitation.

The UE may report the UE capability to a base station during a random access process. In this case, the UE may report whether the above-described methods 1 to 9 are possible when a CORESET/SS configuration overlaps the SBFD UL subband.

For example, the UE may report that none of the methods are possible. In this case, the UE expects that a CORESET does not overlap a UL subband in a PDDCH MO determined according to a CORESET/SS configuration. That is, when the base station configures a CORESET/SS for the UE, the base station may certainly configure the CORESET and the UL subband not to overlap each other in all PDCCH MOs.

For example, the UE may report, to the base station, possible methods such as one, some, or all of the above methods. In this case, when the base station configures a CORESET/SS for the UE, the base station may configure the CORESET and the UL subband to overlap in the PDCCH MO.

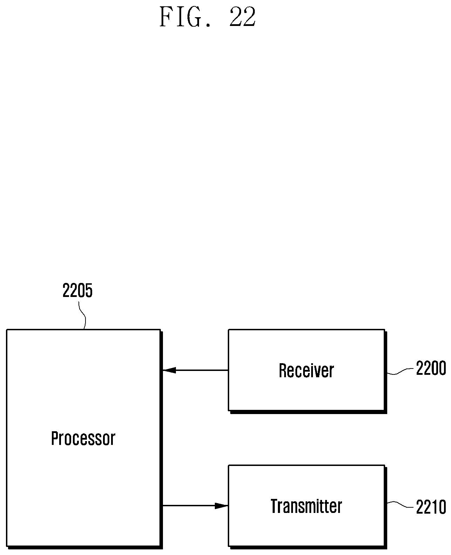

FIG. 22 illustrates a structure of a UE in a wireless communication system according to an embodiment of the disclosure.

Referring to FIG. 22, the UE may include a transceiver, which refers to a receiver 2200 and a transmitter 2210 as a whole, a memory (not illustrated), and a processor 2205 (or controller). The transceiver 2200 and 2210, the memory, and the processor 2205 of the UE may operate according to the above-described communication methods of the UE. However, components of the UE are not limited to the above-described example. For example, the UE may include a larger or smaller number of components than the above-described components. Furthermore, the transceiver, the memory, and the processor may be implemented in the form of a single chip.

The transceiver may transmit/receive signals with the base station. The signals may include control information and data. To this end, the transceiver may include an RF transmitter configured to up-convert and amplify the frequency of transmitted signals, an RF receiver configured to low-noise-amplify received signals and down-convert the frequency thereof, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the UE. In addition, the memory may store control information or data included in signals transmitted/received by the UE. The memory may include a storage medium such as a ROM, a RAM, a hard disk, a CD-ROM, or a DVD, or a combination of storage media. In addition, the memory may include multiple memories.

Furthermore, the processor may control a series of processes such that the UE can operate according to the above-described embodiments. For example, the processor may control components of the UE to receive DCI configured in two layers so as to simultaneously receive multiple PDSCHs. The processor may include multiple processors, and the processor may perform operations of controlling the components of the UE by executing programs stored in the memory.

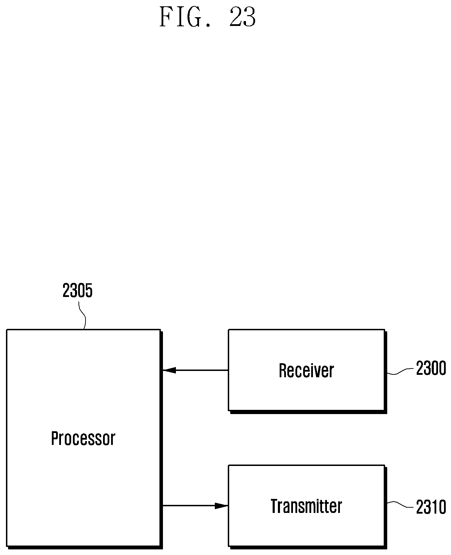

FIG. 23 illustrates a structure of a base station in a wireless communication system according to an embodiment of the disclosure.

Referring to FIG. 23, the base station may include a transceiver, which refers to a receiver 2300 and a transmitter 2310 as a whole, a memory (not illustrated), and a processor 2305 (or controller). The transceiver 2300 and 2310, the memory, and the processor 2305 of the base station may operate according to the above-described communication methods of the base station. However, components of the base station are not limited to the above-described example. For example, the base station may include a larger or smaller number of components than the above-described components. Furthermore, the transceiver, the memory, and the processor may be implemented in the form of a single chip.

The transceiver may transmit/receive signals with the UE. The signals may include control information and data. To this end, the transceiver may include an RF transmitter configured to up-convert and amplify the frequency of transmitted signals, an RF receiver configured to low-noise-amplify received signals and down-convert the frequency thereof, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the base station. In addition, the memory may store control information or data included in signals transmitted/received by the base station. The memory may include storage media such as a ROM, a RAM, a hard disk, a CD-ROM, and a DVD, or a combination of storage media. In addition, the memory may include multiple memories.

The processor may control a series of processes such that the base station can operate according to the above-described embodiments of the disclosure. For example, the processor may control components of the base station to configure DCI configured in two layers including allocation information regarding multiple PDSCHs and to transmit the same. The processor may include multiple processors, and the processor may perform operations of controlling the components of the base station by executing programs stored in the memory.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. As an example, a part of a first embodiment of the disclosure may be combined with a part of a second embodiment to operate a base station and a terminal. Moreover, although the above embodiments have been described based on the FDD LTE system, other variants based on the technical idea of the embodiments may also be implemented in other communication systems such as TDD LTE, and 5G, or NR systems.

In the drawings in which methods of the disclosure are described, the order of the description does not always correspond to the order in which steps are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

In addition, in methods of the disclosure, some or all of the contents of each embodiment may be implemented in combination without departing from the essential spirit and scope of the disclosure.

Various embodiments of the disclosure have been described above. The above description of the disclosure is for the purpose of illustration, and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

**Claims**

1. A method performed by a terminal in a wireless communication system supporting subband non-overlapping full duplex (SBFD), the method comprising:

   receiving, from a base station, a message comprising configuration information on an uplink subband comprising time and frequency resource information for configuring a part of a resource for a downlink reception as a resource for an uplink transmission;
   based on the message, identifying a resource for monitoring a control channel; and
   based on the identified resource, monitoring the control channel.

2. The method of claim 1, wherein the message comprises at least one of information on a valid control resource set (CORESET) resource in which at least one CORESET associated with a search space for monitoring the control channel and the uplink subband do not overlap each other or information on an invalid CORESET resource in which the at least one CORESET and the uplink subband overlap each other, and
   wherein the monitoring comprises performing the monitoring only for the valid CORESET resource.

3. The method of claim 1, wherein the monitoring comprises, in case that a resource block (RB) determined according to a configuration of a control resource set (CORESET) overlaps the uplink subband in a symbol corresponding to a physical downlink control channel (PDCCH) monitoring occasion (MO), monitoring the control channel except for the PDCCH MO.

4. The method of claim 1, wherein the message comprises at least one bitmap indicating whether to perform monitoring for at least one physical downlink control channel (PDCCH) monitoring occasion (MO) or information indicating a symbol type for which monitoring can be performed in the PDCCH MO, and
   wherein the monitoring comprises monitoring the control channel based on the at least one bitmap or the information indicating the symbol type.

5. A method performed by a base station in a wireless communication system supporting subband non-overlapping full duplex (SBFD), the method comprising:

   determining configuration information on an uplink subband comprising time and frequency resource information for configuring a part of a resource for a downlink reception as a resource for an uplink transmission; and
   transmitting, to a terminal, a message comprising the determined configuration information on the uplink subband,
   wherein the configuration information on the uplink subband is information associated with a resource for monitoring a control channel by the terminal.

6. The method of claim 5, wherein the determining of the configuration information on the uplink subband comprises

   determining, as a valid control resource set (CORESET) resource, a CORESET resource in which at least one CORESET associated with a search space for monitoring the control channel and the uplink subband do not overlap each other, or
   determining, as an invalid CORESET resource, a CORESET resource in which the at least one CORESET and the uplink subband overlap each other.

7. The method of claim 5, wherein the determining of the configuration information on the uplink subband comprises determining at least one bitmap indicating whether to perform monitoring for at least one physical downlink control channel (PDCCH) monitoring occasion (MO), and
   wherein the message comprises the at least one bitmap.

8. The method of claim 5, wherein the determining of the configuration information on the uplink subband comprises determining information indicating a symbol type for which monitoring can be performed in a physical downlink control channel (PDCCH) monitoring occasion (MO), and
   wherein the message comprises the information indicating the symbol type.

9. A terminal in a wireless communication system supporting subband non-overlapping full duplex (SBFD), the terminal comprising:

   a transceiver; and
   at least one processor coupled with the transceiver and configured to receive, from a base station, a message comprising configuration information on an uplink subband comprising time and frequency resource information for configuring a part of a resource for a downlink reception as a resource for an uplink transmission, based on the message, identify a resource for monitoring a control channel, and based on the identified resource, monitor the control channel.

10. The terminal of claim 9, wherein the message comprises at least one of information on a valid control resource set (CORESET) resource in which at least one CORESET associated with a search space for monitoring the control channel and the uplink subband do not overlap each other or information on an invalid CORESET resource in which the at least one CORESET and the uplink subband overlap each other, and
    wherein the at least one processor is further configured to perform the monitoring only for the valid CORESET resource.

11. The terminal of claim 9, wherein the at least one processor is further configured to, in case that a resource block (RB) determined according to a configuration of a control resource set (CORESET) overlaps the uplink subband in a symbol corresponding to a physical downlink control channel (PDCCH) monitoring occasion (MO), monitor the control channel except for the PDCCH MO.

12. The terminal of claim 9, wherein the message comprises at least one bitmap indicating whether to perform monitoring for at least one physical downlink control channel (PDCCH) monitoring occasion (MO) or information indicating a symbol type for which monitoring may be performed in the PDCCH MO, and
    wherein the at least one processor is further configured to monitor the control channel, based on the at least one bitmap or the information indicating the symbol type.

13. A base station in a wireless communication system supporting subband non-overlapping full duplex (SBFD), the base station comprising:

    a transceiver; and
    at least one processor coupled with the transceiver and configured to determine configuration information on an uplink subband comprising time and frequency resource information for configuring a part of a resource for a downlink reception as a resource for an uplink transmission, and transmit, to a terminal, a message comprising the determined configuration information on the uplink subband,
    wherein the configuration information on the uplink subband is information associated with a resource for monitoring a control channel by the terminal.

14. The base station of claim 13, wherein the at least one processor is further configured to

    determine, as a valid control resource set (CORESET) resource, a CORESET resource in which at least one CORESET associated with a search space for monitoring the control channel and the uplink subband do not overlap each other, or
    determine, as an invalid CORESET resource, a CORESET resource in which the at least one CORESET and the uplink subband overlap each other.

15. The base station of claim 13, wherein the at least one processor is further configured to

    determine at least one bitmap indicating whether to perform monitoring for at least one physical downlink control channel (PDCCH) monitoring occasion (MO), or
    determine information indicating a symbol type for which monitoring can be performed in the PDCCH MO, and
    wherein the message comprises the at least one bitmap or the information indicating the symbol type.

# FIG. 1

One subframe (110)

$N_{symb}^{subframe,\mu}$ OFDM symbols

1 OFDM symbols (102)

1 subcarrier (103)

$k = N_{RB,x}^{max,\mu} N_{sc}^{RB} - 1$

$N_{RB}^{\mu} N_{sc}^{RB}$ subcarriers

Resource block $N_{sc}^{RB}$ subcarriers (104)

Resource element (k,l) (101)

Frequency

$k=0$

$\bar{l}=0$

$\bar{l}=14 \cdot 2^{\mu} - 1$

Time

FIG. 2

1 frame (200)

1 subframe
(201)

μ=0
(204)

| 0 | 1 | 2 | 3 | 4 | 5 | 6 | 7 | 8 | 9 |

slot
(202)

μ=1
(205)

| 0 | 1 | 2 | 3 | 4 | 5 | 6 | 7 | 8 | 9 | 10 | 11 | 12 | 13 | 14 | 15 | 16 | 17 | 18 | 19 |

slot
(203)

EP 4 598 219 A1

# FIG. 3

BWP#1
(301)

BWP#2
(302)

UE bandwidth
(300)

Frequency

EP 4 598 219 A1

# FIG. 4

duration (404)

Frequecy resources (403)

UE bandwidth part (410)

Slot (420)

Frequency

Time

Control resource set#1 (401)

Control resource set#2 (402)

# FIG. 5

1 symbol
(501)

1 PRB
(502)

DMRS
(505)

CCE
(504)

REG
(503)

FIG. 6

Rate matching resource [602]

PDSCH [601]

Periodicity [605]

Time-domain Allocation [603]

Frequency-domain Allocation [604]

Slot #0    Slot #1    Slot #2

Time

Frequency

FIG. 7

EP 4 598 219 A1

RA type 0
(7-00)

| Bitmap |
|---|

7-15

RA type 1
(7-05)

| Starting VRB | Length |
|---|---|

7-20  7-25

Both RA type 0 & 1
(7-10)

| 1 bit for RA type indication | Max (payload for RA type 0, payload for RA type 1) |
|---|---|

7-30  7-35

# FIG. 8

S
(8-00)

L (8-05)

| 0 | 1 | 2 | 3 | 4 | 5 | 6 | 7 | 8 | 9 | 10 | 11 | 12 | 13 |

OFDM symbol

$$\text{Slot}\left\lfloor n \cdot \frac{2^{\mu_{PDSCH}}}{2^{\mu_{PDCCH}}} \right\rfloor + K_0 \ (8\text{-}10)$$

# FIG. 9

EP 4 598 219 A1

FIG. 10

56

# FIG. 11

TDD periodicity

D D D S U D D D S U D D D S U D D D S U

1101  (a) TDD only configuration

TDD periodicity

D D D S U D D D S U D D D S U D D D S U

UL↕
subband
(1110)↕

1112  1111  (b) SBFD configuration 1

TDD periodicity

D D D S U D D D S U D D D S U D D D S U

UL↕
subband
(1120)↕

1122  1121  (c) SBFD configuration 2

TDD periodicity

D D D S U D D D S U D D D S U D D D S U

1132 1133 1134 1131  (d) SBFD configuration 3

# FIG. 12

TDD periodicity

slot

| D | D | D | S | U |

UL subband (1210)

BWP (1220)

DL symbols     SBFD symbols     DL symbols   UL symbols

# FIG. 13

slot

1301  1311  1312  1313    1314  1315  1316  1317

(a) CORESET_a/SS_a configuration

⬛ UL subband

slot

1320  1321  1322  1323    1324  1325  1326  1327

(b) CORESET_b/SS_b configuration

⬛ UL subband

slot

1330  1331  1332  1333    1334  1335  1336  1337

(c) CORESET_a/SS_a and CORESET_b/SS_b configurations

⬛ UL subband

FIG. 14

# FIG. 15

slot

| 1510 | 1511 | 1512 | 1513 | 1514 | 1515 | 1516 | 1517 | 1518 | 1519 |

| New bitmap for CORESET_a/SS_a | 1 | 0 | 0 | 1 | 0 | 1 | 0 | 0 | 1 | 0 |

(a) When CORESET_a/SS_a is configured with the new bitmap = [10010]

| 1520 | 1521 | 1522 | 1523 | 1524 | 1525 | 1526 | 1527 | 1528 | 1529 |

| New bitmap for CORESET_b/SS_b | 0 | 1 | 1 | 0 | 0 | 0 | 1 | 1 | 0 | 0 |

(b) When CORESET_b/SS_b is configured with the new bitmap = [01100]

| 1530 | 1531 | 1532 | 1533 | 1534 | 1535 | 1536 | 1537 |

| New bitmap for CORESET_a/SS_a | 1 | 0 | 0 | 0 | 1 | 1 | 0 | 0 | 1 | 0 |
| New bitmap for CORESET_b/SS_b | 0 | 1 | 1 | 0 | 0 | 0 | 1 | 1 | 0 | 0 |

(c) When both CORESET_a/SS_a and CORESET_b/SS_b are configured

FIG. 16

# FIG. 17

FIG. 18

PDCCH#2:
monitored with
CCE#5,#6,#7

CCE#7

CCE#6

CCE#5

CCE#4

CCE#3

CCE#2

SBFD UL subband

PDCCH#1:
monitored with
CCE#0

CCE#1

CCE#0

Freq.

time

FIG. 19

FIG. 20

# FIG. 21

| REG bundle#11 |
|---|
| REG bundle#10 |
| REG bundle#9 |
| REG bundle#8 |
| REG bundle#7 |
| REG bundle#6 |
| REG bundle#5 |
| REG bundle#4 |
| REG bundle#3 |

CCE#3

CCE#2

CCE#1

CCE#0

Frequency separation

SBFD UL subband

REG bundle#2

REG bundle#1

REG bundle#0

Freq.

time

# FIG. 22

2205

Processor

Receiver — 2200

Transmitter — 2210

# FIG. 23

2305

Processor

Receiver — 2300

Transmitter — 2310

## INTERNATIONAL SEARCH REPORT

| International application No. |
| --- |
| **PCT/KR2023/016577** |

| A. | CLASSIFICATION OF SUBJECT MATTER |
| --- | --- |

**H04W 72/23**(2023.01)i; **H04W 72/04**(2009.01)i; **H04L 5/00**(2006.01)i; **H04L 27/26**(2006.01)i; **H04L 5/14**(2006.01)i

According to International Patent Classification (IPC) or to both national classification and IPC

| B. | FIELDS SEARCHED |
| --- | --- |

Minimum documentation searched (classification system followed by classification symbols)

H04W 72/23(2023.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SBFD, 상향링크 서브밴드(uplink subband), PDCCH 모니터링(monitoring), CORESET, 비트맵(bitmap), 심볼 타입(symbol type)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | MODERATOR (CATT). Summary #4 of subband non-overlapping full duplex. R1-2210317, 3GPP TSG RAN WG1 #110bis-e. 20 October 2022. <br> See pages 10-13, 26, 72, 90 and 164 and figures 2-11. | 1-15 |
| A | MEDIATEK INC. Discussion on subband non-overlapping full duplex for NR. R1-2209770, 3GPP TSG RAN WG1 Meeting #110bis-e. 30 September 2022. <br> See pages 1-17. | 1-15 |
| A | NOKIA et al. On subband non-overlapping full duplex for NR. R1-2210042, 3GPP TSG RAN WG1 #110bis-e. 30 September 2022. <br> See pages 1-21. | 1-15 |
| A | NTT DOCOMO, INC. Discussion on subband non-overlapping full duplex. R1-2209902, 3GPP TSG RAN WG1 #110bis-e. 30 September 2022. <br> See pages 1-17. | 1-15 |
| A | SAMSUNG. SBFD feasibility and design considerations for NR duplex evolution. R1-2206421, 3GPP TSG-RAN WG1 Meeting #110. 12 August 2022. <br> See pages 1-23. | 1-15 |

☐ Further documents are listed in the continuation of Box C.     ☐ See patent family annex.

| | | |
| --- | --- | --- |
| \* | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **01 February 2024** | **01 February 2024** |

| Name and mailing address of the ISA/KR | Authorized officer |
| --- | --- |
| **Korean Intellectual Property Office** <br> **Government Complex-Daejeon Building 4, 189 Cheongsa-** <br> **ro, Seo-gu, Daejeon 35208** | |
| Facsimile No. **+82-42-481-8578** | Telephone No. |

Form PCT/ISA/210 (second sheet) (July 2022)